(19) Europäisches Patentamt
European Patent Office
Office européen des brevets

(11) EP 3 401 381 B1

(12) EUROPÄISCHE PATENTSCHRIFT

(45) Veröffentlichungstag und Bekanntmachung des Hinweises auf die Patenterteilung:
**06.01.2021 Patentblatt 2021/01**

(51) Int Cl.:
***C09K 11/06*** *(2006.01)*

(21) Anmeldenummer: **17170682.3**

(22) Anmeldetag: **11.05.2017**

(54) **ORGANISCHE MOLEKÜLE FÜR DIREKTES SINGULETT-HARVESTING MIT KURZER EMISSIONSABKLINGZEIT ZUR VERWENDUNG IN OPTO-ELEKTRONISCHEN VORRICHTUNGEN**

ORGANIC MOLECULES FOR DIRECT SINGLET HARVESTING WITH SHORT EMISSION DEFLECTION TIME FOR USE IN OPTOELECTRONIC DEVICES

MOLÉCULES ORGANIQUES POUR RÉCOLTE DIRECTE DE SINGULETS À TEMPS D'EXTINCTION D'ÉMISSION PLUS COURT DESTINÉS À L'UTILISATION DANS DES DISPOSITIFS OPTOÉLECTRONIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.11.2018 Patentblatt 2018/46**

(73) Patentinhaber: **Sichuan Knowledge Express Institute for Innovative Technologies Co. LTD.**
**Sichuan Province (CN)**

(72) Erfinder:
- **Yersin, Hartmut**
  **93161 Sinzing (DE)**
- **Mataranga-Popa, Larisa**
  **93053 Regensburg (DE)**
- **Czerwieniec, Rafal**
  **93083 Obertraubling (DE)**

(74) Vertreter: **Sedlacek, Anton**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
**WO-A1-2017/017205 JP-A- 2010 024 149**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 401 381 B1

## Beschreibung

Die Erfindung betrifft organische Moleküle und deren Verwendung in opto-elektronischen Vorrichtungen. Diese organischen Moleküle weisen eine Donator- und eine Akzeptoreinheit auf, die durch zwei organische nicht-konjugierte Brücken verbunden sind. Die Brücken weisen eine verminderte Hyper-Konjugation auf. Dadurch lassen sich Triplett-Singulett-Energieabstände von nur wenigen meV erzielen. Das ermöglicht eine 100 %-ige Exzitonen-Nutzung in OLEDs mit einer kurzen Emissions-Abklingzeit. Dieser neue Mechanismus repräsentiert ein Direktes Singulett-Harvesting. Diese Moleküle sind zur Anwendung in opto-elektronischen Vorrichtungen besonders geeignet. Im Gegensatz zu dem bereits nach dem Stand der Technik bekannten "Singulett-Harvesting-Effekt mit einer stark temperatur-abhängigen thermisch aktivierten verzögerten Fluoreszenz (TADF) (bedingt durch eine größere Energiedifferenz $\Delta E(^1CT\text{-}^3CT)$ in der Größenordnung von mehreren 100 $cm^{-1}$ (einige 10 meV)) erfolgt beim Direkten Singulett-Harvesting Effekt das Inter-System-Crossing zwischen nahezu iso-energetischen $^3CT$- und $^1CT$-Zuständen mit $\Delta E(^1CT\text{-}^3CT)$-Werten in der Größenordnung von 10 $cm^{-1}$ (0,12 meV). In diesen Molekülen erfolgen die Prozesse zur Besetzung des $^1CT$-Zustandes schnell, so dass die Emissionsabklingzeit aus diesen $^1CT$-Zuständen insbesondere fünf- bis zehnfach schneller ist als in Molekülen, die TADF zeigen.

## Hintergrund

Für viele opto-elektronische Anwendungen sind lumineszierende Moleküle (= Emitter-Moleküle) gefordert, die eine möglichst kurze Emissions-Abklingzeit $\tau$ und eine hohe Emissions-Quantenausbeute $\phi_{PL}$ (= Photolumineszens-Quantenausbeute) aufweisen. Kurze Emissionsabklingzeiten sind von Bedeutung z. B. zur Erzielung langer OLED-Devicelebensdauer, weil die Wahrscheinlichkeit für chemische Reaktionen (Zersetzungen) der Emittermoleküle im angeregten Zustand geringer wird. Darüber hinaus ist es für derartige Anwendungen mit rein organischen Emitter-Molekülen, also mit Molekülen, die keine Metall-Komplex-Verbindungen darstellen, von Bedeutung, die elektronische Besetzung des untersten angeregten Triplett-Zustandes $T_1$ in den Emissionsprozess einzubeziehen. Diese Anforderung kann dadurch erfüllt werden, dass zwischen dem $T_1$-Zustand und dem darüber liegenden Singulett-Zustand $S_1$ eine ausreichend kleine Energiedifferenz $\Delta E(S_1\text{-}T_1)$ eingestellt wird, um eine thermisch aktivierte verzögerte (delayed) Fluoreszenz (TADF) bei Raumtemperatur zu ermöglichen. (Figur 1) Dieser Prozess ist dem Fachmann bekannt (siehe z. B. C. A. Parker, C. G. Hatchard; Trans. Faraday, Royal Society of Chem. 1961, 57, 1894) und wird auch als Up-Konversion nach dem E-Typ bezeichnet (da erstmals für Eosin entdeckt). Als Folge einer effektiven TADF ist erreichbar, dass die Abklingzeit der Lumineszenz (= Emission) $\tau$(TADF) bei Involvierung des langlebigen Triplett-Zustandes um mehrere Größenordnungen gegenüber der der Phosphoreszenz $\tau(T_1)$ reduziert wird. Ferner kann dadurch in vielen Fällen erreicht werden, dass die Emissions-Quantenausbeute $\phi_{PL}$ deutlich erhöht wird, weil die strahlungslosen Prozesse aus dem $T_1$-Zustand (gewellt dargestellt in Figur 1) wegen des konkurrierenden schnelleren Rückbesetzungsprozesses $T_1 \rightarrow k_BT \rightarrow S_1$ weniger zum Tragen kommen.

Aus dem Stand der Technik ist bekannt, dass bei vielen Molekülen mit einem intra-molekularen Charge-Transfer(CT)-Übergang zwischen einem Donator(D)-Segment und einem Akzeptor(A)-Segment eine TADF auftreten kann. Allerdings sind die bisher gefundenen Energiedifferenzen $\Delta E(^1CT\text{-}^3CT)$ noch deutlich zu groß, und damit sind die für viele Anwendungen geforderten photophysikalischen Eigenschaften wie eine kurze Abklingzeit ohne lange Abklingzeit-Ausläufer, die nach dem Stand der Technik bis in den ms-Bereich reichen, nicht erzielbar.

Weiterhin offenbart die Druckschrift WO2017/017205 A1 organische Moleküle mit zwei nicht-konjugierten Brücken zwischen Donator und Akzeptor für eine effektive thermisch aktivierte verzögerte Fluoreszenz zur Anwendung in opto-elektronischen Vorrichtungen. Die Druckschrift JP2010024149 A offenbart zudem ein organisches Molekül mit Siebenring-Strukturen, welches sich durch eine besonders günstige Glasübergangstemperatur auszeichnet und insbesondere in blauemittierenden organischen opto-elektronischen Vorrichtungen zur Anwendung kommt.

## Beschreibung

Überraschenderweise ist es nun gelungen, ein Verfahren (molekulares Aufbauprinzip) zu finden, dass es gestattet, die Energiedifferenz $\Delta E(S_1\text{-}T_1)$ gezielt zu verkleinern und entsprechende rein organische Moleküle bereitzustellen. Diese Energiedifferenz ist näherungsweise proportional zum quantenmechanischen Austauschintegral gemäß Gleichung (1)

$$\Delta E(S_1\text{- }T_1) \approx \text{const.} \langle \psi_D(r_1)\psi_A{}^*(r_2) | r_{12}{}^{-1} | \psi_D(r_2)\psi_A{}^*(r_1) \rangle \qquad (1)$$

Hierin sind $r_1$ und $r_2$ die Elektronenkoordinaten und $r_{12}$ der Abstand zwischen Elektron 1 und Elektron 2. $\psi_D$ ist die Wellenfunktion des HOMO (highest occupied molecular orbital), die sich für den erfindungsgemäßen Molekültyp

vorwiegend über den Donatorteil D des Moleküls erstreckt, während $\psi_A$* das LUMO (lowest unoccupied molecular orbital) repräsentiert und sich vorwiegend über den Akzeptorteil A des Moleküls erstreckt. Anhand der Gleichung (1) ist erkennbar, dass

$\Delta E(S_1\text{-}T_1)$ klein wird, wenn das Produkt der Wellenfunktionen $[\psi_D(r_1)\psi_A{}^*(r_2)]$ klein wird. Diese Anforderung ist nach dem Stand der Technik mit intra-molekularen CT-Übergängen nur unzureichend erfüllbar, weil räumliche Ausdehnungen der Wellenfunktionen $\psi_D(r_1)$ und $\psi_A{}^*(r_2)$ zu ausgeprägten Überlagerungen und damit zu zu großen $\Delta E(S_1\text{-}T_1)$-Werten führen. Es werden organische Moleküle zur Verfügung gestellt, die extrem verminderte Überlagerungen der Wellenfunktionen aufweisen. Das gelingt durch einen Molekülaufbau, in dem die Donator- bzw. Akzeptor-Molekülteile durch nicht-konjugierte, kleine chemische Gruppen (Brücken) voneinander getrennt werden. Dadurch wird die Ausdehnung des HOMO in den Akzeptor-Bereich und des LUMO in den Donator-Bereich stark vermindert. Darüber hinaus gelingt es, durch eine chemische Versteifung einer oder beider Brücken, die Flexibilität des Donatorteils gegenüber dem Akzeptorteil zu vermindern. Dadurch gelingt es, die Emissionsquantenausbeute zu erhöhen und die Inhomogenität der $\Delta E(S_1\text{-}T_1)$-Werte der Emittermoleküle zu vermindern.

In den erfindungsgemäßen Molekülen mit extrem verminderten Überlappungen der Wellenfunktionen werden darüber hinaus die in den nicht-konjugierten, kleinen chemischen Gruppen (Brücken) nach dem Stand der Technik noch vorhandenen Hyper-Konjugationen (dem Fachmann bekannt) durch Substitutionen vermindert. Dadurch wird die Ausdehnung des HOMO in den Akzeptor-Bereich und des LUMO in den Donator-Bereich weiterhin vermindert.

Die erfindungsgemäßen Moleküle befinden sich in opto-elektronischen Vorrichtungen in der Regel in Umgebungen von anderen Molekülen, z. B. aufgedampften anderen kleinen Molekülen oder Polymeren. Diese werden hier als Matrizen oder Matrixmaterialien bezeichnet. Die erfindungsgemäßen Moleküle können auch gelöst sein, wobei dann das Lösungsmittel die Matrix darstellt. Die Energieniveaus der erfindungsgemäßen Moleküle, die in derartigen Matrixmaterialien/Umgebungen eingebaut, eindotiert oder gelöst sind, werden durch die Polarität der Matrix in unterschiedlicher Weise beeinflusst. Diese Eigenschaft wird weiter unten weiter erläutert.

Die Formeln Ia und Ib zeigen das Strukturmotiv der erfindungsgemäßen organischen Moleküle mit zwei organischen Brücken zwischen dem Donator- und dem Akzeptor-Segment. Durch geeignete Wahl dieser Brücken kann die räumliche Überlagerung von HOMO (vorwiegend auf dem Donator liegend) und LUMO (vorwiegend auf dem Akzeptor liegend) deutlich reduziert werden, und zwar durch weitgehende Unterdrückung der Hyper-Konjugation durch Substitution(en) in einer oder beider Brücken. Eine verbleibende geringfügige Überlappung der Orbitale ist allerdings sinnvoll, um die Übergangswahrscheinlichkeit zwischen dem elektronischen Grundzustand $S_0$ und dem angeregten $S_1$-Zustand ($^1$CT-Zustand) nicht zu klein werden zu lassen. [R. Czerwieniec et al., Coord. Chem. Rev. 2016, 325, 2-26] Darüber hinaus führt die Zweifach-Verbrückung zu einer Versteifung des Moleküls. Damit werden eine Erhöhung der Emissionsquantenausbeute sowie eine Reduktion der Emissionshalbwertsbreite erreicht. Letzteres ist in vielen Fällen zur Erzielung einer definierten Emissionsfarbe (Farbreinheit) für die Lichterzeugung z. B. in OLEDs sinnvoll. Ferner wird das Auftreten der langlebigen Schwänze der Emissionsabklingkurven weitgehend unterbunden.

Die Formeln Ia und Ib: zeigen Strukturmotive der erfindungsgemäßen organischen Moleküle bestehend aus einem aromatischen oder einem hetero-aromatischen Donator-Segment D, D1, D2 und einem über zwei oder vier nicht-konjugierte Brücken B1, B2, B3 und B4 gebundenen aromatischen oder einem hetero-aromatischen Akzeptor-Segment A. Die aromatischen oder hetero-aromatischen Molekülteile sind mit elektronen-schiebenden bzw. -ziehenden Substituenten substituiert und werden dadurch zu Donatoren bzw. Akzeptoren. Ausführungsbeispiele werden unten gegeben. Die Brücken sind so gewählt, dass sie ausgeprägte Überlappungen vom Donator-HOMO mit dem Akzeptor-LUMO verhindern. Die Brücke B2 und/oder die Brücke B3 kann beispielsweise eine aromatische oder hetero-aromatische Einheit aufweisen. Insbesondere weisen die Brücken eine reduzierte Hyper-Konjugation im Vergleich zum Stand der Technik auf. Das führt zu einer wesentlich kleineren Energiedifferenz $\Delta E(^1CT\text{-}^3CT)$, wie weiter unten erläutert wird.

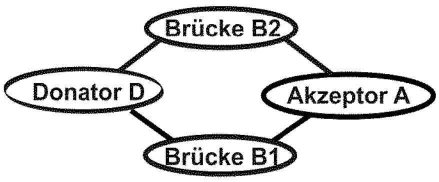


**Formel Ia**

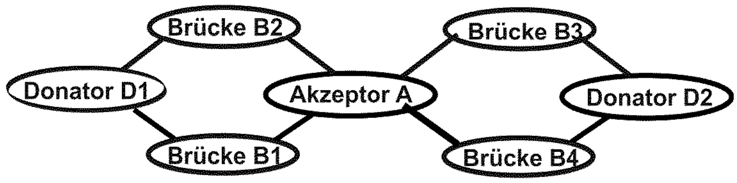


**Formel Ib**

Für eine opto-elektronische Anwendung mit einer Anforderung an einen kleinen $\Delta E(S_1 - T_1)$-Wert ist es darüber hinaus wichtig, dass der Energie-Abstand zwischen dem auf dem Donator lokalisierten HOMO und dem auf dem Akzeptor lokalisierten LUMO zwischen etwa 1,8 und 3,3 eV beträgt, damit die Energie des HOMO $\rightarrow$ LUMO Überganges im Sichtbaren liegt. Die Energie-Niveaus von HOMO und LUMO sind durch die Stärken der elektronenschiebenden (für die Donatoren) bzw. der elektronen-ziehenden (für die Akzeptoren) Wirkungen beschreibbar. (Diese Begriffe sind dem

Fachmann bekannt und werden auch weiter unten in konkreten Ausführungsformen beschrieben.)

In den erfindungsgemäßen Molekülen beträgt die Energiedifferenz $\Delta E(S_1-T_1)$ (= $\Delta E(^1CT-^3CT)$) weniger als 20 $cm^{-1}$ (2,5 meV), besser weniger als 10 $cm^{-1}$ (≈ 1,2 meV). Damit sind die Singulett-und Triplett-Charge-Transfer-Zustände im Vergleich zu der bei Raumtemperatur vorliegenden thermischen Energie von $k_BT$ = 210 $cm^{-1}$ im Wesentlichen isoenergetisch. Detaillierte Anleitungen zum Molekül-Aufbau werden unten angegeben. Der entsprechende Wert wird durch das individuelle Molekül festgelegt. Er lässt sich durch quantenmechanischen Rechnungen ermitteln, zum Beispiel unter Verwendung käuflich zu erwerbender TD-DFT-Programme (z. B. mit dem Gaussian 09-Programm, insbesondere bei Verwendung eines MO6 Funktionals) oder der frei verfügbaren NWChem Version (z. B. Version 6.1), der CC2-Methode (TURBOMOLE GmbH, Karlsruhe) oder einer CAS-Methode (Complete Active State Methode). [Siehe z. B. D. I. Lyakh, M. Musiaz, V. F. Lotrich, R. J. Bartlett, Chem. Rev. 2012, 112, 182-243 und P. G. Szalay, T. Muller, G. Gidofalvi, H. Lischka, R. Shepard, Chem. Rev. 2012, 112, 108-181] Ausführungsbeispiele sind unten angegeben.

Die Emissionsabklingzeit $\tau$(300 K) sollte für viele Anwendungen kürzer als 2 $\mu$s, besser kürzer als 1 $\mu$s sein. Um das zu erreichen, kann es neben der Einstellung eines kleinen $\Delta E(^1CT-^3CT)$-Wertes zusätzlich sinnvoll sein, die Wirksamkeit der Spin-Bahn-Kopplung (SBK, SOC) zwischen dem $^3$CT-Zustand und höheren Molekül-Energiezuständen zu erhöhen, um eine größere Inter-System-Crossing (ISC)-Rate zu erhalten. Hierfür eignet sich zum Beispiel eine Substitution des Donator-Segments D und/oder des Akzeptor-Segments A und/oder einer oder beider Brücken mit einem Halogen Cl, Br und/oder I.

Eine Erhöhung der ISC-Rate wird für die erfindungsgemäßen Moleküle auch erreicht durch zu den CT-Zuständen energetisch eng benachbarte auf Donator D und/oder Akzeptor A und/oder einer oder beider Brücken liegende lokalisierte Triplett-Zustände $^3$LE (LE = lokalisiert angeregt). Die Erhöhung der ISC-Rate zwischen den $^1$CT- und $^3$CT-Zuständen ergibt sich durch eine Verstärkung der Spin-Bahn-Kopplung aufgrund quantenmechanischer Mischungen zwischen diesen Zuständen mit den $^3$LE-Zuständen. Die Ziel-Moleküle werden unter Verwendung bekannter Rechenprogramme bzw. quantenmechanischer Methoden (z. B. Gaussian 09 oder CC2-Methode) ermittelt. Diese Mischungen sind umso effektiver, je enger die Zustände energetisch benachbart sind. Eine gegenseitige energetische Verschiebung lässt sich über Veränderungen der Donator- und/oder der Akzeptorstärken sowie über Veränderungen der elektronenschiebenden Substitutionen am Donator und/oder über Veränderungen der elektronenziehenden Substitutionen am Akzeptor erreichen. Auch durch eine Verwendung von mehr als einer elektronen-schiebenden und/oder -ziehenden Substitutionen kann eine energetische Verschiebung erreicht werden. Von besonderer Bedeutung kann in einer Ausführungsform der Erfindung die Verwendung einer Matrix mit geeigneter Polarität sein. Dadurch lassen sich die $^1$CT- und $^3$CT-Zustände im Gegensatz zu $^3$LE-Zuständen energetisch verschieben (sofern dies gewünscht ist, falls das organische Molekül nicht die gewünschte Reihenfolge der Zustände aufweist), so dass die $^{1,3}$CT-Zustände unterhalb oder nur geringfügig oberhalb der $^3$LE-Zustände zu liegen kommen. Die Polarität der Matrix kann durch die Dielektrizitätskonstante $\varepsilon$ beschrieben werden. (Werte können entsprechenden Literatur-Tabellen entnommen werden.) Der Einfluss der Polarität lässt sich auch durch die oben genannten Rechenprogramme erfassen.

Der Einfluss der Polarität der Matrix, z. B. des Lösungsmittels, wird an Hand der Figur 2 erläutert. In dieser Abbildung ist die Rot-Verschiebung der Emissionsspektren mit wachsender Polarität des Lösungsmittels (quantifiziert durch die Dielektrizitätskonstante $\varepsilon$) dargestellt. Die Emission resultiert von einem erfindungsgemäßen Molekül, das weiter unten beschrieben wird (Beispielmolekül 1).

Die erfindungsgemäßen organischen Moleküle sind so aufgebaut, dass die $^1$CT- und $^3$CT-Zustände unterhalb der $^3$LE-Zustände liegen, z. B. um weniger als 1500 $cm^{-1}$ (≈ 190 meV) oder besser weniger 500 $cm^{-1}$ (≈ 63 meV) noch besser weniger als 100 $cm^{-1}$ (≈ 12 meV). Eine energetische Lage der $^3$LE-Zustände geringfügig unter den $^1$CT - und $^3$CT-Zuständen (z. B. 50 $cm^{-1}$, ≈ 6 meV) ist auch möglich. Die entsprechenden Energiedifferenzen lassen sich mit quantentheoretischen TD-DFT-Rechnungen bestimmen. Darüber hinaus kann experimentell ermittelt werden, ob der lokalisierte $^3$LE-Zustand energetisch unterhalb der $^{1,3}$CT-Zustände liegt, indem Tieftemperatur-Emissionsspektren (z. B. bei 77 K oder 10 K) aufgenommen werden. In diesem Fall ist die Emission strukturiert, so dass Vibrationssatelliten-Strukturen aufgelöst werden können. Darüber hinaus ist die Emissionsabklingzeit des dann emittierenden $^3$LE-Zustandes, die im Bereich von ms bis s liegt, deutlich länger als die $^1$CT-Abklingzeit (< 2 $\mu$s). Im umgekehrten Fall finden sich breite CT-Spektren mit Halbwertsbreiten von einigen tausend $cm^{-1}$ und kurzen Abklingzeiten.

Die chemischen Brücken zwischen den Donator- und Akzeptor-Segmenten des organischen Moleküls haben nicht nur den Effekt einer Versteifung des Moleküls, sondern führen überraschender Weise auch zu einer Erhöhung der Emissions-Quantenausbeute $\phi_{PL}$.

Darüber hinaus bewirken die Brücken eine starke Einschränkung der freien Beweglichkeit des Donator-Molekülsegments D gegenüber dem Akzeptor-Molekülsegment A des organischen Moleküls. Dadurch wird die Variation des $\Delta E(^1CT-\ ^3CT)$-Wertes, d. h. die Inhomogenität dieses Wertes, eines in einer Polymer-Matrix eingebauten gegebenen Emitter-Moleküls stark eingeschränkt, so dass die häufig im Stand der Technik anzutreffenden langen Emissionsabklingzeiten im Bereich der langlebigen "Abkling-Schwänze" deutlich vermindert werden. Ferner wird eine Verbesserung der Farbreinheit der Emission durch eine Verringerung der Halbwertsbreite der Emissionsbande erreicht.

Erstaunlicherweise zeigen die erfindungsgemäßen Moleküle (optional zusammen mit einer Matrix mit einer

Polarität, beschrieben durch die Dielektrizitätskonstante, im Bereich 2,4 $\leq \varepsilon \leq$ 5,0), die effektives ISC und eine sehr kleine Energiedifferenz $\Delta E(^1CT- ^3CT)$ zwischen den $^1CT$- und $^3CT$-Zuständen aufweisen ($\Delta E(^1CT- ^3CT)$ kleiner als 20 $cm^{-1}$ (2,5 meV), besser kleiner als 10 $cm^{-1}$ ($\approx$ 1,2 meV)) keine zeitlich verzögerte TADF-Emission, sondern nur eine $^1CT$-Fluoreszenz. Diese ist mit einem Wert von unter 2 $\mu$s bis unter 500 ns deutlich kurzlebiger, als die der nach dem Stand der Technik bekannten TADF-Emitter. Die erfindungsgemäßen organischen Moleküle, ggf. zusammen mit einer Matrix als Zusammensetzung oder Kombination, die als Emitter in OLEDs eingesetzt werden, können alle Singulett- und Triplett-Exzitonen im Singulett-Charge-Transfer-Zustand sammeln, und zwar in einem Zeitfenster, das innerhalb der Abklingzeit der Fluoreszenz liegt. Das heißt, es handelt sich um einen "Direkten Singulett-Harvesting Effekt". Infolgedessen zeigen die erfindungsgemäßen Emitter-Matrix-Kombinationen nur die kurzen Abklingzeiten der Fluoreszenz, die z. B. nur einige hundert ns bis 1 oder 2 $\mu$s betragen. Bei dieser Fluoreszenz handelt sich um eine mit dem nahezu iso-energetischen $^3CT$-Zustand equilibrierte Fluoreszenz aus dem $^1CT$-Singulett-Zustand. In Abgrenzung zu dem bereits nach dem Stand der Technik bekannten Singulett-Harvesting-Effekt mit einer stark temperaturabhängigen thermisch aktivierten verzögerten Fluoreszenz (TADF) (bedingt durch eine größere Energiedifferenz $\Delta E(^1CT-^3CT)$ im Bereich einiger $10^2$ $cm^{-1}$) erfolgt beim "Direkten Singulett-Harvesting Effekt" das ISC zwischen nahezu iso-energetischen $^3CT$- und $^1CT$-Zuständen. In diesen Molekülen - optional in Kombination mit einer Matrix - erfolgen die Prozesse zur Besetzung des $^1CT$-Zustandes schnell, so dass die Emissionsabklingzeit aus diesen $^1CT$-Zuständen insbesondere fünf- bis zehnfach kürzer ist als in Molekülen, die TADF zeigen.

**Beschreibung des Molekülaufbaus nach den Formeln Ia und Ib**

Der molekulare Aufbau der erfindungsgemäßen Emittermaterialien mit Strukturmotiven nach den Formel Ia und Ib wird anhand der Formeln IIa bis IIe weiter erläutert. Die gleichzeitige Verwendung von polaren Matrizen, d. h. Matrizen mit einer Dielektrizitätskonstanten (Polarität) von zum Beispiel 2,4 $\leq \varepsilon \leq$ 4,5 in einer Zusammensetzung mit einem erfindungsgemäßen organischen Molekül kann zu weiteren Verbesserungen des Direkten Singulett-Harvesting Effektes führen (Verkürzung der $^1CT$-Fluoreszenz-Abklingzeit).

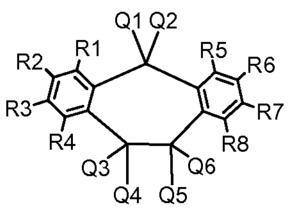

-

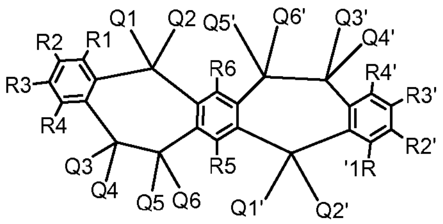

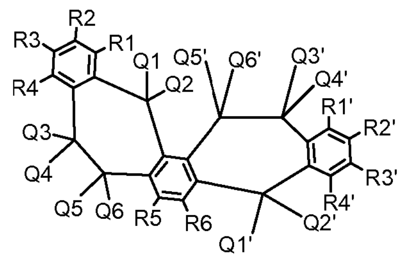

**Formel IIa** **Formel IIb** **Formel IIc**

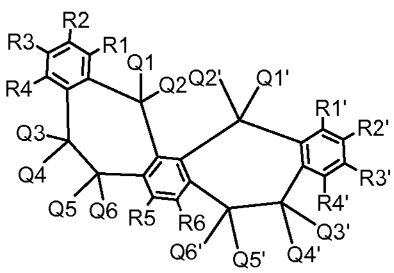

**Formel IId**

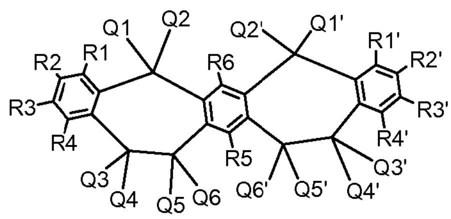

**Formel IIe**

Das Grundgerüst der erfindungsgemäßen organischen Moleküle nach den Formeln IIa bis IIe ist 2,3:6,7-Dibenzosuberan. Durch geeignete, hier gezeigte Substitutionen werden die elektronischen Eigenschaften der aromatischen Ringsysteme gesteuert, so dass der mit R1 bis R4 substituierte Molekülteil zum Donatorteil D bzw. die mit R1 bis R4 und R1' bis R4' substituierten Molekülteile zu Donatorteilen D1 und D2 im Sinne der Formeln Ia und Ib werden und der mit R5 bis R8 bzw. der mit R5 und R6 substituierte Molekülteil zum Akzeptorteil A wird. Die mit Q1 bis Q6 substituierten Methylen- und Ethylen-Gruppen des 2,3:6,7-Dibenzosuberans repräsentieren die Brücken B1 bzw. B2 und die mit und Q1' bis Q6' substituierten Methylen- und Ethylen-Gruppen des 2,3:6,7-Dibenzosuberans repräsentieren die Brücken B3 bzw B4 der Formeln Ia und Ib.

Brücken:

Q1, Q2, Q1' und Q2' sind unabhängig voneinander Alkyl, Alkenyl, Alkinyl, Cycloalkyl oder Aryl. Q3 bis Q6 und Q3' bis Q6' sind unabhängig voneinander H, Alkyl, Alkenyl, Alkinyl, Cycloalkyl oder Aryl.

Dabei ist:

Alkyl ein geradkettiges (unverzweigtes) oder verzweigtes ($C_1$-$C_{10}$)-Alkyl, das 1 bis 10 Kohlenstoffatome in der Hauptkohlenwasserstoffkette aufweist (z. B. Methyl, Ethyl, n-Propyl, i-Propyl, n-Butyl, i-Butyl, t-Butyl, n-Pentyl, usw.),
Alkenyl ein geradkettiges oder verzweigtes ($C_1$-$C_{10}$)-Alkenyl, das 1 bis 10 Kohlenstoffatome in der Hauptkohlenwasserstoffkette aufweist (z. B. Propen-2-yl, n-Buten-2-yl, n-Buten-3-yl),
Alkinyl ein geradkettiges oder verzweigtes ($C_1$-$C_{10}$)-Alkinyl, das 1 bis 10 Kohlenstoffatome in der Hauptkohlenwasserstoffkette aufweist (z. B. Propen-2-yl, n-Buten-2-yl, n-Buten-3-yl), Cycloalkyl ein ($C_3$-$C_7$)-Cykloalkyl, das 3 bis 7 Ring-Kohlenstoffatome aufweist, und
Aryl eine 5-Ring- oder 6-Ring aromatische oder heteroaromatische Gruppe, z. B. Benzol, Thiophen, Furan, Imidazol, Azol, Diazol, Triazol, Tetrazol, Oxazol, usw.
Unter "Hauptkohlenwasserstoffkette" wird hier die längste Kette des verzweigten oder nichtgeradkettigen Alkyls, Alkenyls oder Alkinyls verstanden.

Jede Gruppe Q1 bis Q6 und Q1' bis Q6' kann unabhängig voneinander unsubstituiert oder mit einem oder mehreren F, Cl, Br, Alkoxyl, Thioalkoxyl, Amin, Silan, Phosphan, Boran oder Aryl substituiert sein.

Die Gruppen Q1 und Q2, die Gruppen Q3 und Q4, die Gruppen Q5 und Q6, die Gruppen Q1' und Q2', die Gruppen Q3' und Q4', sowie die Gruppen Q5' und Q6', können miteinander chemisch verknüpft sein, so dass weitere Ringsysteme entstehen.

Donatorteil:

R1 bis R4 und R1' bis R4' sind unabhängig voneinander H, Alkyl, Alkenyl, Alkinyl, Cycloalkyl, Alkoxyl, Thioalkoxyl, Amin, Phosphan, Silan, Boran, Fluor, Chlor, Brom oder die unten anhand Formel III definierte Gruppe Akr, wobei in Formel IIa zumindest eine Position von R1 bis R4 Akr ist und in den Formeln IIb bis IIe zumindest eine Position von R1 bis R4 und zumindest eine Position von R1' bis R4' Akr ist.

Dabei sind:

Alkyl ein geradkettiges oder verzweigtes ($C_1$-$C_{10}$)-Alkyl (z. B. Methyl, Ethyl, n-Propyl, i-Propyl, n-Butyl, i-Butyl, t-Butyl, n-Pentyl, usw.), das 1 bis 10 Kohlenstoffatome in der Hauptkohlenwasserstoffkette aufweist,
Alkenyl ein geradkettiges oder verzweigtes ($C_1$-$C_{10}$)-Alkenyl (z. B. Propen-2-yl, n-Buten-2-yl, n-Buten-3-yl), das 1 bis 10 Kohlenstoffatome in der Hauptkohlenwasserstoffkette aufweist,
Alkinyl ein geradkettiges oder verzweigtes ($C_1$-$C_{10}$)-Alkinyl (z. B. Propen-2-yl, n-Buten-2-yl, n-Buten-3-yl), das 1 bis 10 Kohlenstoffatome in der Hauptkohlenwasserstoffkette aufweist, Cycloalkyl ein ($C_3$-$C_7$)-Cykloalkyl, das 3 bis 7 Ring-Kohlenstoffatome aufweist, und
Aryl eine 5-Ring- oder 6-Ring- aromatische oder heteroaromatische Gruppe, z. B. Benzol, Thiophen, Furan, Imidazol, Azol, Diazol, Triazol, Tetrazol, Oxazol, usw.

Bei den Substitutionen Alkoxyl, Thioalkoxyl, Amin, Phosphan, Silan und Boran handelt es sich jeweils um ein Alkoxyl O-R', Thioalkoxyl S-R', Amin N-R'R", Phosphan P-R'R", Silan SiR'R"R'" und Boran BR'R", wo R', R" und R'" unabhängig voneinander ein geradkettiges oder verzweigtes ($C_1$-$C_{10}$)-Alkyl, ($C_1$-$C_{10}$)-Alken, ($C_1$-$C_{10}$)-Alkin, ($C_3$-$C_7$)-Cycloalkyl oder eine 5-Ring-oder 6-Ring aromatische bzw. heteroaromatische Gruppe bedeuten.

Die Gruppe Akr besteht aus einer Struktur der Formel IIIa und IIIb:

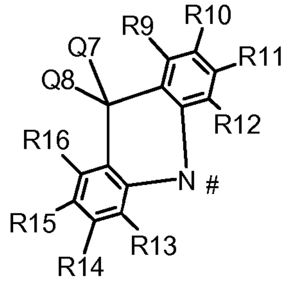

**Formel IIIa**

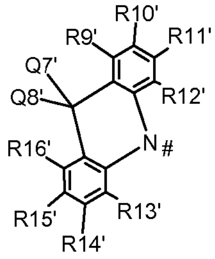

**Formel IIIb**

Darin:

markiert # die Stelle, über die die Akr Gruppe mit dem Rest des Moleküls verbunden ist, R9 bis R16 und R9' bis R16' sind unabhängig voneinander H, ($C_1$-$C_{10}$)-Alkyl, ($C_1$-$C_{10}$)-Alkenyl, ($C_1$-$C_{10}$)-Alkinyl, ($C_3$-$C_7$)-Cycloalkyl, Alkoxyl O-R', Amin N-R'R", Phosphan PR'R", Silan SiR'R"R"', Boran BR'R", Fluor, Chlor, Brom oder Aryl, wobei Reste R', R" und R'" unabhängig voneinander geradkettiges oder verzweigtes ($C_1$-$C_{10}$)-Alkyl, ($C_1$-$C_{10}$)-Alken, ($C_1$-$C_{10}$)-Alkin, ($C_3$-$C_7$)-Cycloalkyl oder eine 5-Ring- oder 6-Ring aromatische bzw. heteroaromatische Gruppe bedeuten;

Q7, Q8, Q7' und Q8' sind wie Q1 bis Q6 und Q1' bis Q6' definiert und können miteinander verknüpft sein, so dass ein weiteres Ringsystem entsteht.

Akzeptorteil:

R5 bis R8 sind unabhängig voneinander H, $CH_3$, CN, COR', CO(OR'), CO(NR'R"), $SO_2$R', $SO_2$(OR'), SOR', $CF_3$, $CF_2$R', wobei R' oben definiert ist. Zumindest eine Gruppe ist nicht H oder $CH_3$.
Ferner sind in Formel IIa vorzugsweise zumindest zwei Substituenten ausgewählt aus R5, R6, R7 und R8 kein H und kein $CH_3$.
In einer Ausführungsform der erfindungsgemäßen Moleküle können zwei benachbarte Gruppen ausgewählt aus R5, R6, R7 und R8 miteinander chemisch verbunden sein. Solche Verknüpfungen, die eine Versteifung der Molekülstruktur bewirken, können - wie dem Fachmann bekannt - zu einer Erhöhung der Emissions-Quantenausbeute führen.
In einer Ausführungsform der erfindungsgemäßen Moleküle können Wasserstoffatome in einer, mehreren oder in allen Positionen des erfindungsgemäßen Moleküls der Formel IIa bis IIe durch Deuterium ersetzt sein, zum Beispiel um die Emissionsquantenausbeute zu erhöhen.
In einer weiteren Ausführungsform weist das erfindungsgemäße Molekül eine Struktur nach den Formeln IVa bis IVd auf.

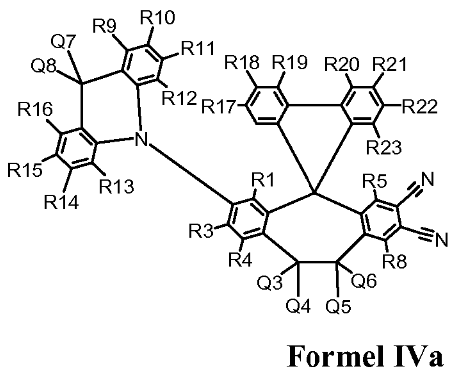

**Formel IVa**

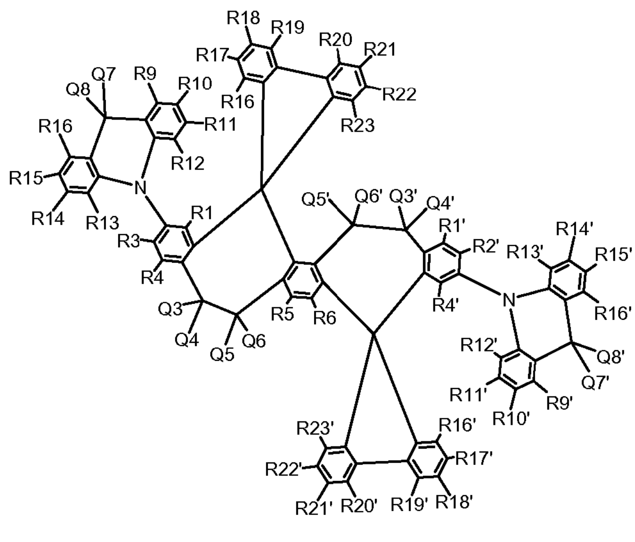

**Formel IVb**

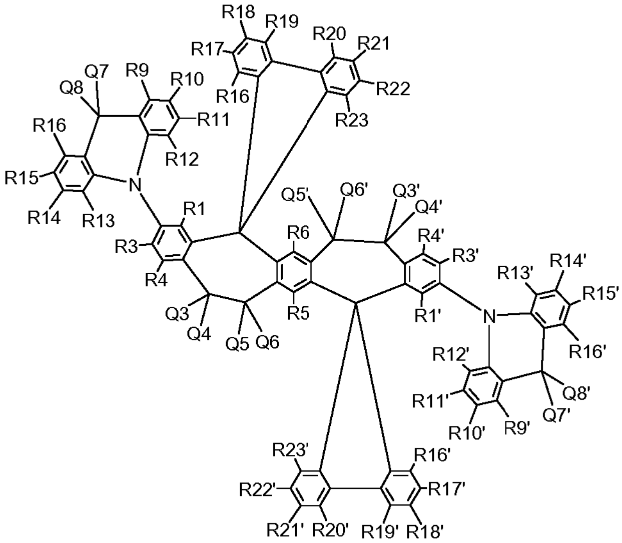

Formel IVc

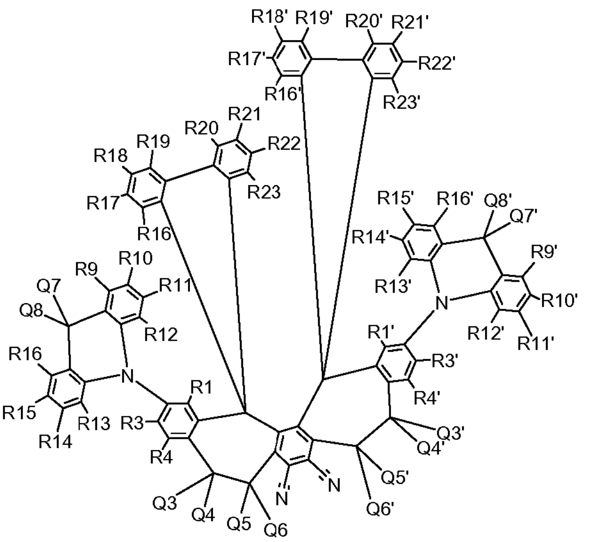

Formel IVd

Die Substituenten R1 bis R8, R1' bis R8', Q3 bis Q6 und Q3' bis Q6' sind unter den Formeln IIa bis IIe und die Substituenten R9 bis R16 und Q7 bis Q8 unter den Formeln IIIa und IIIb erläutert. R16 bis R23 und R16' bis R23' sind wie R9 bis R16 und R9' bis R16' definiert.

In einer weiteren bevorzugten Ausführungsform weist das erfindungsgemäße organische Molekül eine Struktur nach Formel V auf.

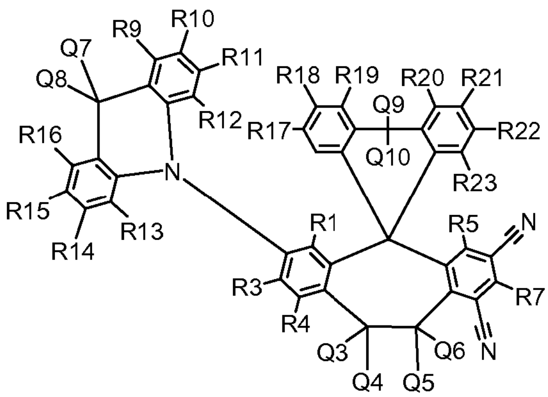

Formel V

Die Substituenten R1 bis R23 und Q3 bis Q8 sind unter den Formeln IIa bis IIe, III, IIIb und IVa bis IVd erläutert.

Q9 und Q10 sind wie Q1 bis Q8 und Q1' bis Q8' definiert und können miteinander verknüpft sein, so dass ein weiteres Ringsystem entsteht.

In einer weiteren bevorzugten Ausführungsform weist das erfindungsgemäße organische Molekül eine Struktur nach Formel VI auf.

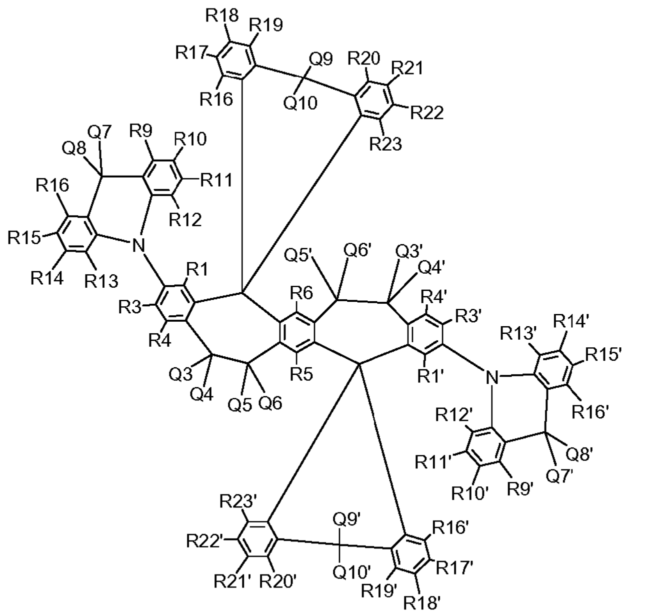

Formel VI

Die Substituenten R1 bis R23, R1' bis R23', Q3 bis Q10 und Q3' bis Q8' sind unter den Formeln IIa bis IIe, III, IIIb, IVa bis IVd und V erläutert.

Q9' und Q10' sind wie Q1 bis Q10 und Q1' bis Q8' definiert und können miteinander verknüpft sein, so dass ein weiteres Ringsystem entsteht.

In weiteren bevorzugten Ausführungsformen weist das erfindungsgemäße organische Molekül Strukturen nach den Formeln VII bis XVI auf.

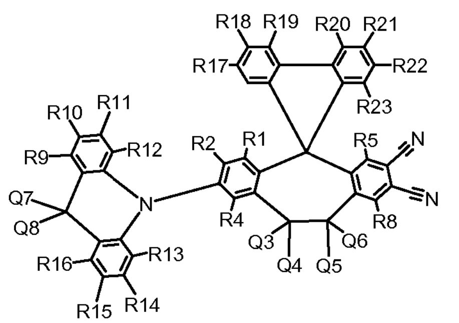

Formel VII

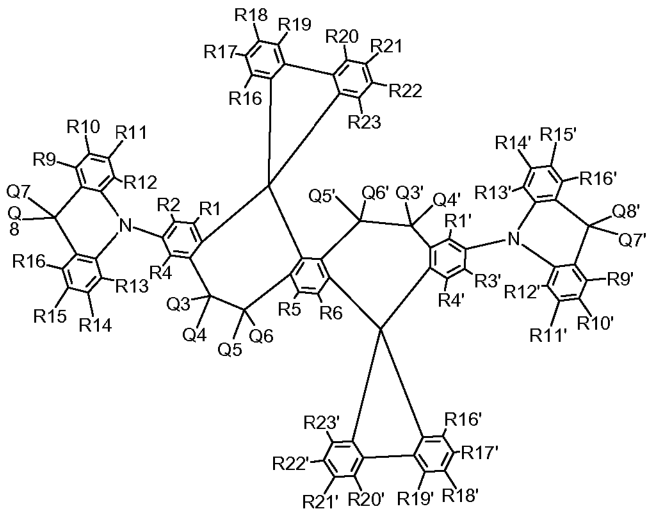

Formel VIII

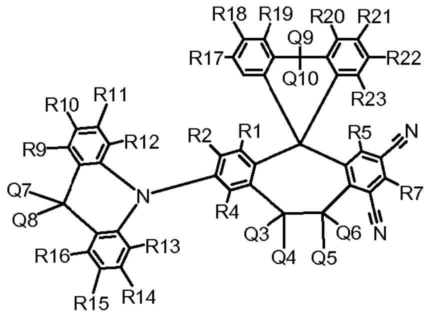

**Formel IX**

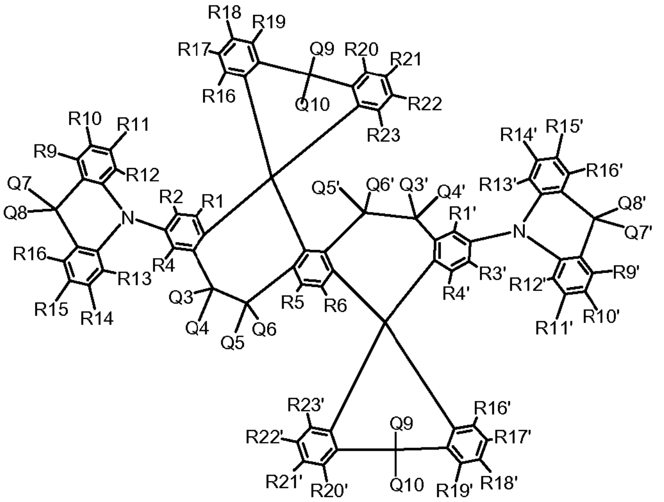

**Formel X**

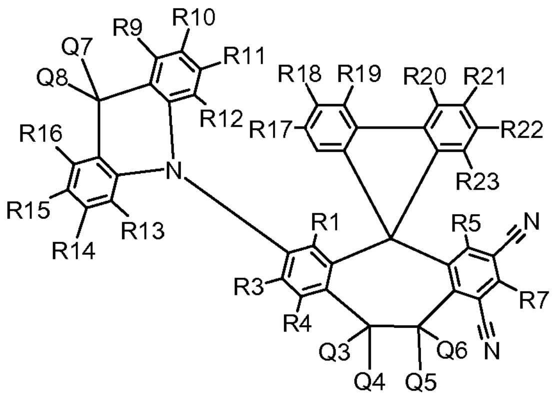

**Formel XI**

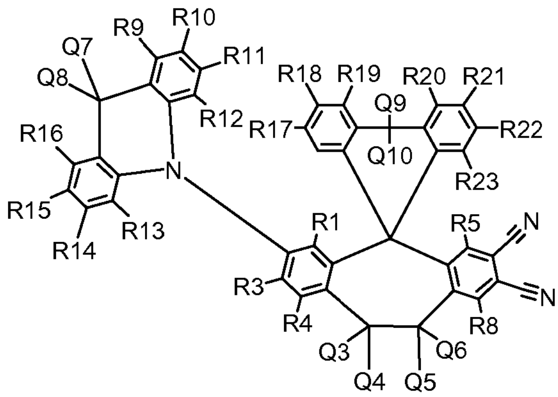

**Formel XII**

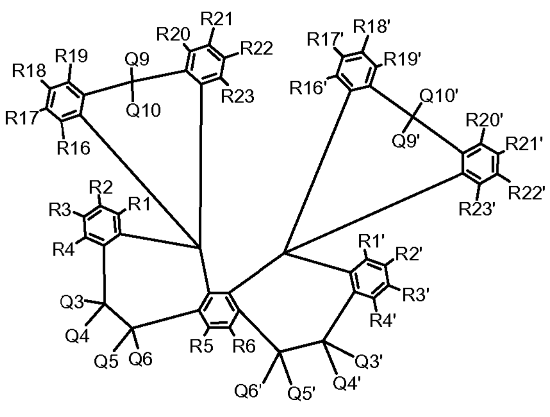

**Formel XIII**

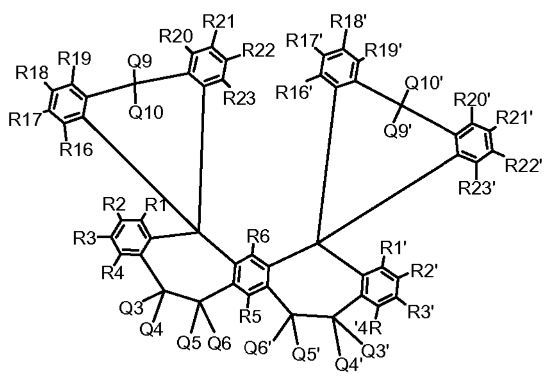

**Formel XIV**

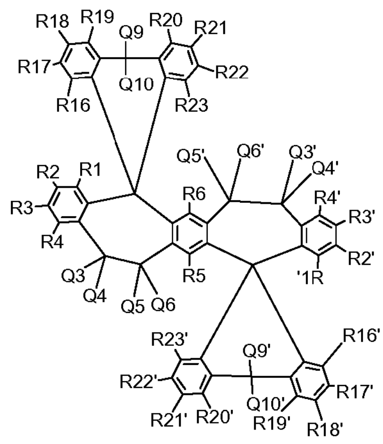

**Formel XV**

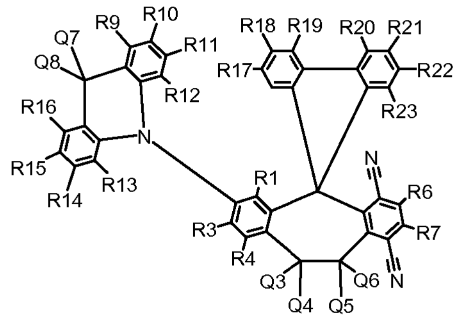

**Formel XVI**

Dabei gelten die oben genannten Definitionen.

**Beispiele**

Die erfindungsgemäßen organischen Moleküle, die Teil einer Zusammensetzung oder Kombination mit einem Matrixmaterial sein können, können unter Verwendung von bekannten katalytischen Kupplungsreaktionen (z. B. Suzuki-Kupplungsreaktion, Buchwald-Hartwig- Kreuzkupplungsreaktion) synthetisiert werden.

Die organischen Moleküle (Emittermoleküle) weisen eine Energiedifferenz zwischen den Charge-Transfer-Zuständen $\Delta E(^1CT-^3CT)$ kleiner 20 $cm^{-1}$ (2,5 meV) besser kleiner 10 $cm^{-1}$ ($\approx$ 1,2 meV) auf. Diese kleine Energiedifferenz wird im Gegensatz zum Stand der Technik dadurch erreicht, dass eine über die Brücke(n) vorhandene Hyper-Konjugation durch Substitution(en) an der $C_1$-Brücke B2 bzw. B3 deutlich vermindert wird. Das wird durch das hier gezeigte Strukturmotiv verdeutlicht:

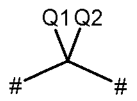

und

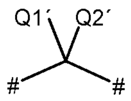

wobei

# die Stelle ist, über die das Kohlenstoffatom bzw. das Spiro-Kohlenstoffatom der Brücke B2 oder B3 mit den Donator- bzw Akzeptor-Fragment des Moleküls der Formel Ia oder Ib verbunden ist. Ferner gilt: Q1, Q2, Q1' und Q2' $\neq$ H.

Die Emitter-Moleküle befinden sich (z. B. in OLEDs) in einer festen Matrix und stellen somit die Emissionsschicht dar. Die Polarität der Matrix wird so gewählt, dass die lokalisierten $^3$LE-Zustände energetisch oberhalb der $^{1,3}$CT-Zustände liegen, z. B. um weniger als 1500 $cm^{-1}$ ($\approx$ 190 meV) oder besser weniger 500 $cm^{-1}$ ($\approx$ 63 meV) noch besser weniger als 100 $cm^{-1}$ ($\approx$ 12 meV). Andererseits können die $^3$LE-Zustände bis 50 $cm^{-1}$ ($\approx$ 6 meV) unter den $^{1,3}$CT-Zuständen liegen. Die zu wählende Matrix-Polarität kann zum Beispiel, ausgedrückt durch die Dielektrizitätskonstante $\varepsilon$, in dem Bereich $2,2 \leq \varepsilon \leq 5,0$ liegen.

**Beispiel 1**

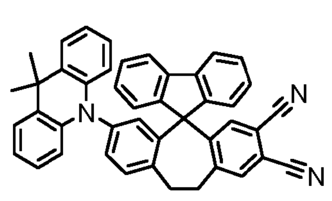

Beispielmolekül **1.**

Im Folgenden wird das unter Beispiel **1** gezeigte erfindungsgemäße Molekül detaillierter diskutiert.

Die in Figur 3 gezeigten Grenzorbitale lassen erkennen, dass HOMO und LUMO in deutlich verschiedenen Raumbereichen des Moleküls lokalisiert sind. Das lässt bereits erwarten, dass die Aufspaltung zwischen dem untersten Triplett- und dem darüber liegenden Singulett-Zustand klein ist. Eine Rechnung für das Beispielmolekül **1** im Rahmen einer TD-DFT-Rechnung (Funktional B3LYP und ebenso Funktional MO6) zeigt, dass diese Energiedifferenz für die optimierte Triplett-Geometrie $\Delta E(^1CT-^3CT) = 7\ cm^{-1}$ (0,87 meV) beträgt. Somit repräsentiert Beispielmolekül **1** einen erfindungsgemäßen Emitter, der geeignet ist für die Verwendung in optoelektronischen Vorrichtungen, wie OLEDs.

Die chemische Synthese des Beispielmoleküls 1 ist ausgehend von im Handel erhältlichen Edukten im folgenden Reaktionsschema erläutert.

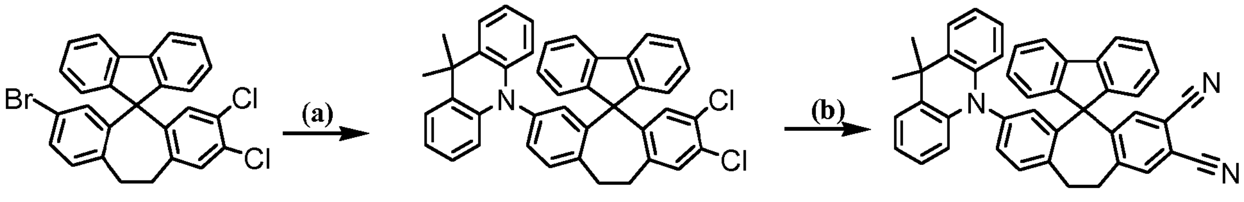


1

Reaktanden und Reaktionsbedingungen:

(a) 9,9-Dimethyl-9,10-dihydroacridin, $Pd(CH_3COO)_2$, $P[(C(CH_3)_3]_3$, $(CH_3)_3CONa$, 90 °C, 19 h.
(b) Zn(CN)2, 1,1'-Bis(diphenylphosphino)ferrocen, [1,1'-Bis(diphenylphosphino)ferrocen] dichlorpalladium(II), Komplex mit Dichlormethan, N-Methyl-2-pyrrolidon,180 °C, 12 h.

Chemische Analysen:
$^1$H NMR (300 MHz, CDCl3, δ): 7.71 (d, *J* = 7.5 Hz, 2H), 7.66 (s, 1H), 7.34 (q, *J* = 7.5 Hz, 6H), 7.22 (d, *J* = 7.5 Hz, 1H), 7.11 (d, *J* = 7.5 Hz, 2H), 6.92 (d, *J* = 7.5 Hz, 1H), 6.80 (t, *J* = 9 Hz, 3H), 6.71 (t, *J* = 7.5 Hz, 2H), 6.32 (d, *J* = 3 Hz, 1H), 5.72 (d, *J* = 7.5 Hz, 2H), 3.48 (d, *J* = 3.6Hz, 4H), 1.53 (s, 6H). $^{13}$C NMR (75 MHz, CDCl3, δ): 156.35, 148.69, 148.36, 140.53, 130.07, 129.22, 128.59, 126.07, 124.79, 124.67, 121.51, 120.43, 113.66, 66.47, 38.13, 36.73, 35.82, 30.49. MS (HR-ES-MS = hochauflösende Elektrospray Massenspektrometrie) *m/z*: $C_{44}H_{31}N_3$ ergibt: 601.2518; gefunden 601.3514. $C_{44}H_{31}N_3$ ergibt: C, 87.82; H, 5.19; N, 6.98, gefunden: C, 87.48; H, 5.41; N, 6.60.

Kristallstruktur:
In Figur 4 ist die Molekülstruktur dargestellt, die sich aus einer Röntgenstrukturbestimmung ergibt. Weitere Strukturdaten sind in Tabellen 1 und 2 zusammengefaßt.

**Tabelle 1** Röntgenstrukturdaten für das Molekül nach Beispiel 1.

| | |
|---|---|
| Formel | $C_{44}H_{31}N_3$ |
| $D_{calc.}$/ g cm$^{-3}$ | 1,237 |
| $\mu$/mm$^{-1}$ | 0,556 |
| Molmasse | 601,72 |
| Farbe | gelb |
| Form | irregulär |
| Größe/mm$^3$ | 0,21×0,20×0,14 |
| T/K | 123,00(10) |
| Kristallsystem | monoklin |
| Raumgruppe | $P2_1/c$ |
| *a*/Å | 10,68690(10) |
| *b*/Å | 12,46700(10) |
| *c*/Å | 24,3981(3) |
| $\alpha$/° | 90 |
| $\beta$/° | 96,2130(10) |
| $\gamma$/° | 90 |
| V/Å$^3$ | 3231,55(6) |

(fortgesetzt)

| | |
|---|---|
| $Z$ | 4 |
| $Z'$ | 1 |
| Wellenlänge/Å | 1,54184 |
| Strahlung | CuK□ |
| $\Theta_{min}/°$ | 3,645 |
| $\Theta_{max}/°$ | 73,424 |
| Gemessene Reflexe | 35409 |
| Unabhängige Reflexe | 6430 |
| verwendete Reflexe | 5714 |
| $R_{int}$ | 0,0284 |
| Parameterzahl | 426 |
| Einschränkungen | 0 |
| der größte Peak | 0,229 |
| das tiefste Loch | -0,238 |
| GoF | 1,024 |
| $_wR_2$ (alle Daten) | 0,1037 |
| $_wR_2$ | 0,0988 |
| $R_1$ (alle Daten) | 0,0438 |
| $R_1$ | 0,0388 |

**Tabelle 2** Atom-Koordinaten x, y, z ($\times 10^4$ Å) und Auslenkungsparameter U(eq) ($Å^2 \times 10^3$) für das Beispielmolekül 1.

| | | | | |
|---|---|---|---|---|
| C(16) | 7402,8(10) | 2049,8(9) | 5585,6(4) | 23,7(2) |
| C(21) | 8030,3(11) | 3858,2(9) | 3240,5(5) | 24,8(2) |
| C(19) | 7645,4(10) | 3096,7(8) | 4145,6(4) | 21,4(2) |
| C(22) | 8573(1) | 3936,8(9) | 2753,4(5) | 25,2(2) |
| C(1) | 6884,5(11) | 2918,2(9) | 6429,5(5) | 24,9(2) |
| C(5) | 5332,2(11) | 1756,1(9) | 5912,3(5) | 24,3(2) |
| C(40) | 7533,0(11) | 4274,0(9) | 4318,0(4) | 25,7(2) |
| N(2) | 10626,8(11) | 3462,3(12) | 1766,7(5) | 47,8(3) |
| C(25) | 9216,8(11) | 2264,9(9) | 3493,5(5) | 26,1(2) |
| C(33) | 6256,0(11) | 2827,1(10) | 3965,1(4) | 25,5(2) |
| C(30) | 8434,4(11) | 1387(1) | 5703,9(5) | 28,7(3) |
| C(32) | 8222,1(11) | 4777,5(10) | 2362,9(5) | 30,4(3) |
| C(23) | 9493,8(11) | 3196(1) | 2638,9(5) | 26,9(2) |
| C(28) | 9138,5(11) | 1837,9(9) | 4812,4(5) | 25,5(2) |
| C(29) | 9292,5(12) | 1309,6(10) | 5322,5(5) | 30,6(3) |
| C(4) | 4527,6(11) | 1832,9(9) | 6326,9(5) | 28,0(2) |
| C(6) | 4920,9(12) | 1231,6(9) | 5415,4(5) | 29,5(3) |
| C(24) | 9783,3(12) | 2364,2(10) | 3005,9(5) | 29,4(3) |
| C(39) | 6273,3(12) | 4601,8(10) | 4262,2(5) | 31,6(3) |
| C(34) | 5755,3(12) | 1848,6(11) | 3783,0(5) | 33,3(3) |
| C(2) | 6125,4(12) | 3020(1) | 6861,2(5) | 29,6(3) |
| C(3) | 4907,4(12) | 2390,2(10) | 6877,4(5) | 30,8(3) |
| C(15) | 7982,5(12) | 3530,6(10) | 6432,3(5) | 31,8(3) |
| C(7) | 3735,3(12) | 784,4(10) | 5331,2(6) | 35,6(3) |
| C(38) | 5484,3(12) | 3714,1(11) | 4032,5(5) | 32,2(3) |
| C(27) | 10145,3(12) | 1681,8(11) | 4433,3(5) | 31,4(3) |
| C(26) | 9615,5(13) | 1326,1(10) | 3858,0(5) | 31,9(3) |
| C(41) | 8492,1(14) | 4958,6(10) | 4511,5(5) | 34,9(3) |
| C(31) | 10125,5(11) | 3318,4(11) | 2151,1(5) | 32,9(3) |

(fortgesetzt)

| | | | | |
|---|---|---|---|---|
| C(9) | 3345,8(12) | 1353,5(11) | 6230,5(6) | 38,1(3) |
| C(8) | 2943,3(12) | 838,5(11) | 5740,3(7) | 40,8(3) |
| C(44) | 5964,0(16) | 5627,9(11) | 4426,3(6) | 43,9(4) |
| C(11) | 5092,0(14) | 1528,7(12) | 7334,7(6) | 42,4(3) |
| C(14) | 8339,7(14) | 4229,3(11) | 6862,5(6) | 41,2(3) |
| C(10) | 3850,2(14) | 3162,4(13) | 7009,6(6) | 42,7(3) |
| C(12) | 6530,2(14) | 3722,4(12) | 7290,8(6) | 41,8(3) |
| C(35) | 4458,2(14) | 1764,8(14) | 3659,6(6) | 46,5(4) |
| C(42) | 8171,6(17) | 5992,8(11) | 4664,7(6) | 48,4(4) |
| C(37) | 4182,6(13) | 3620,1(15) | 3900,4(6) | 47,3(4) |
| C(13) | 7613,4(15) | 4322,9(13) | 7297,2(6) | 47,4(4) |
| C(43) | 6920,2(18) | 6310,2(11) | 4629,1(6) | 52,0(4) |
| C(36) | 3693,7(14) | 2642,2(17) | 3713,7(6) | 54,3(4) |

Das Beispielmolekül **1** läßt sich vakuum-sublimieren (Temperatur 250 °C, Druck $6x10^{-5}$ mbar) und auch in vielen organischen Lösungsmitteln lösen, z. B. in Dichlormethan ($CH_2Cl_2$), Toluol, Tetrahydrofuran (THF), Aceton, Dimethylformamid (DMF), Acetonitril, Ethanol, Methanol, Xylen oder Benzol. Die gute Löslichkeit in Chloroform ermöglicht auch ein Eindotieren zum Beispiel in Polymethylmethacrylat (PMMA) oder Polystyrol.

**Photophysikalische Messungen**

Beispielmolekül 1 gelöst in Toluol mit einem Wert der Dielktrizitätskonstanten $\varepsilon$ = 2,4 (bei T = 300 K) zeigt eine Emission (T = 300 K) mit einem Maximum im Blauen bei 468 nm. (Figur 5) Die Emissions-Quantenausbeute $\Phi_{PL}$ ist hoch. Sie beträgt $\Phi_{PL}$ = 65 % für eine Stickstoff-gespülte Lösung. Die Abklingzeit beträgt für Beispiel **1** nur 420 ns. (Figur 6) Eine kurze Abklingzeit hat große Bedeutung für OLED-Anwendungen, weil für Emitter mit kürzeren Abklingzeiten als die im Vergleich zum Stand der Technik berichteten TADF-Abklingzeiten (etwa 5 $\mu$s) die dem Fachmann bekannten Roll-Off-Effekte weniger Bedeutung haben und die Device-Stabilität zunimmt.

DFT-Rechnungen (Figur 3) zeigen, dass das Beispielmolekül 1 Charge-Transfer(CT)-Übergänge aufweist. Derartige Übergänge sind durch die unmittelbare Umgebung des Emitters (Matrix/Lösungsmittel) zu beeinflussen. Figur 2 verdeutlicht dieses Verhalten. Mit wachsender Polarität der Matrix weist der emittierende 1CT-Singulett-Zustand eine Rotverschiebung auf. Entsprechende Aussagen resultieren auch aus TD-DFT-Rechnungen, wenn die Dielektrizitätskonstante $\varepsilon$ als Parameter rechnerisch berücksichtigt wird.

Der Effekt der Polarität der Matrix zeigt sich auch, wenn Beispielmolekül 1 gelöst in Diethylether untersucht wird. Diese Matrix weist mit $\varepsilon$ = 4,3 einen höheren Wert auf als Toluol. Die Emission (T = 300 K) zeigt ein rot-verschobenes Maximum bei 515 nm (Figur 7a), und die Emissions-Quantenausbeute $\Phi_{PL}$ beträgt sogar 70 % für eine Stickstoff-gespülte Lösung. Die Abklingzeit wird mit $\tau$ = 960 ns bestimmt. (Figur 7b) Aus den angegebenen Werten läßt sich die entsprechende radiative Rate zu $k^r = \Phi_{PL}/\tau = 7{,}3\ 10^5\ s^{-1}$ ermitteln. Bei dieser Emission handelt es sich um eine mit dem nahezu iso-energetischen $^3$CT-Zustand equilibrierte Fluoreszenz. Weitere Erläuterungen werden unten gegeben. Diese Deutung wird auch durch quantenmechanische Rechnungen bestätigt. Für den elektronischen So $\rightarrow$ $^1$CT Übergang ergibt die TD-DFT-Rechnung (für die $^1$CT-Geometrie) eine Oszillatorstärke von f = 0,00115. Hieraus kann die radiative Rate für den Übergang abgeschätzt werden, wenn eine in der Literatur [N. Turro, Modern Molecular Photochemistry, The Benjamin/Cummings Publ., Menlo Park, Calif. 1978, Seite 87] angegebene Näherung und die energetische Lage der Emission (Figur 7a) verwendet werden. Diese Abschätzung ergibt eine radiative Rate für die prompte Fluoreszenz von $k^r = 6{,}5\ 10^5\ s^{-1}$, was - bezogen auf die einfache Näherung - in relativ guter Übereinstimmung mit der experimentell ermittelten Rate ist. Die alternative Deutung, dass es sich bei diesem Emissionsprozeß um eine Phosphoreszenz aus dem Triplett-Zustand handeln könnte, läßt sich wegen der kurzen Abklingzeit von unter 1 $\mu$s und der hohen Emissions-Quantenausbeute für einen in flüssiger Lösung vorliegenden Emitter ausschließen. Dieser Wert der Abklingzeit von 980 ns ist ebenfalls kürzer, als die kürzeste bisher gemessene TADF-Abklingzeit. Der beschriebene Emissionsprozeß stellt allerdings keine TADF-Emission dar. Es handelt sich vielmehr um eine mit dem nahezu iso-energetischen $^3$CT-Zustand equilibrierte Fluoreszenz aus dem $^1$CT-Singulett-Zustand. Bei Anwendung in einem OLED werden alle Triplett- und Singulett-Exzitonen gesammelt werden. Auf diese bedeutende Eigenschaft wird weiter unten ausführlich eingegangen.

Figur 8 zeigt das Emissionsverhalten der Beispielsubstanz 1 dotiert in einer polaren Matrix (mit einem formalen $\varepsilon$-Wert von $\approx$ 4.4), die energetisch höher liegende $^{1,3}$CT-Zustände als Beispiemolekül **1** und einen kleinen energetischen Singulett-Triplett-Abstand aufweist. Bei dieser Matrix handelt es sich um einen TADF-Emitter, dessen Emissionseigenschaften hier aber nicht von Bedeutung sind. Die Strukturformel der Matrix-Substanz ist:

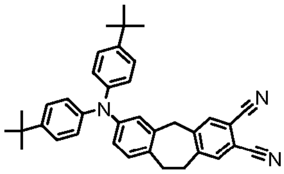

Das Emissionsspektrum dieser Emitter-Matrix-Kombination/Zusammensetzung) ist in Figur 8 dargestellt. Auch bei dieser Emission mit der Abklingzeit von 530 ns handelt es sich um eine mit dem nahezu iso-energetischen $^3$CT-Zustand equilibrierte Fluoreszenz aus dem 1CT-Singulett-Zustand.

In Figur 9 sind Emissionsspektren des Beispielmoleküls **1** für verschiedene Temperaturen (T = 300 K, 150 K und 10 K) miteinander verglichen. Außer einer geringfügigen spektralen Verschiebung zeigen sich über den gesamten Temperaturbereich keine Veränderungen, wie sie im Gegensatz dazu für TADF-Emitter zu erwarten wären (Ausfrieren der TADF-Emission). Auch die radiative Rate der Emission ändert sich nicht wesentlich. Diese Meßergebnisse zeigen, dass der Emissionsmechanismus über den gesamten Temperaturbereich unverändert bleibt, wie für eine mit dem nahezu iso-energetischen $^3$CT-Zustand equilibrierte Fluoreszenz aus dem 1CT-Singulett-Zustand erwartet wird.

In Figur 10 wird das Emissionsverhalten des Beispielmoleküls **1** in einer polaren Umgebung wie Diethylether oder der diskutierten festen TADF-Matrix an Hand eines Energieniveaudiagramms erläutert. Tieftemperatur-Messungen zeigen, dass der lokalisierte $^3$LE-Zustand energetisch oberhalb der $^{1,3}$CT-Zustände liegt. Quantenmechanische Mischungen dieses $^3$LE-Zustandes über die Mechanismen der SOC (spin-orbit coupling = Spin-Bahn-Kopplung) und der Konfigurations-Wechselwirkung (CI) sind mit den CT-Zuständen möglich. Da ferner Singulett- und Triplett-CT-Zustände ähnliche Potentialflächen aufweisen, sind die für die ISC-Rate verantwortlichen Franck-Condon-Faktoren groß. (Dem Fachmann ist dieser Begriff bekannt.) Auf Grund dieser Eigenschaften ist zu erwarten, dass ein schnelles ISC zwischen dem $^1$CT-Zustand und dem $^3$CT-Zustand auftritt. "Schnell" bedeutet in diesem Zusammenhang, dass die ISC-Prozesse schneller als die prompte Fluoreszenz erfolgen. In der Tat wird auch bei tiefer Temperatur (z. B. T = 10 K) z. B. für Beispielmolekül **1** in der TADF-Matrix keine $^3$CT-Phosphoreszenz beobachtet.

Bei einer Verwendung der erfindungsgemäßen Zusammensetzung (Emittermolekül in einer polaren Matrix) in einer OLED werden die Singulett-Exzitonen zur Besetzung des CT-Singuletts und die Triplett-Exzitonen zur Besetzung des CT-Triplett-Zustandes führen. Da sich die Besetzungen beider CT-Zustände wegen der schnellen ISC-Prozesse im Gleichgewicht befinden und die prompte $^1CT \rightarrow S_0$ Fluoreszenz sehr viel schneller erfolgt als die spinverbotene $^3CT \rightarrow S_0$ Phosphoreszenz, ist eine mit dem nahezu iso-energetischen $^3$CT-Zustand equilibrierte Fluoreszenz aus dem $^1$CT-Singulett-Zustand zu beobachten. Das bedeutet, alle Anregungsprozesse können zur direkten Besetzung und Emission des CT-Singulett-Zustandes führen. Das heißt, es findet ein "Direktes Singulett-Harvesting" statt. Diese Erfindung stellt somit organische Emittermoleküle für optoelektronische Vorrichtungen bereit, sowie ein Verfahren zur Anpassung dieser, die im Vergleich zum Stand der Technik zu einer deutlichen Verkürzung der Emissionsabklingzeit (z. B. um einen Faktor fünf bis zehn) führen.

**Beispiel 2**

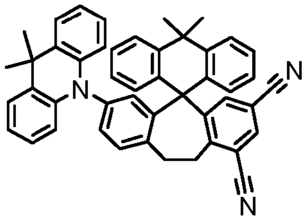

Beispielmolekül **2**

Die in Figur 11 gezeigten Grenzorbitale lassen erkennen, dass HOMO und LUMO in deutlich verschiedenen Raumbereichen des Moleküls lokalisiert sind. Das lässt bereits eine sehr geringe Aufspaltung zwischen dem untersten Triplett-CT- und dem darüber liegenden Singulett-CT-Zustand erwarten. Eine Rechnung für das Beispielmolekül **2** im Rahmen einer TD-DFT-Rechnung (Funktional B3LYP; Basissatz 6-31G(d,p)) zeigt, dass diese Energiedifferenz für die optimierte Singulett-Geometrie $\Delta E(^1CT-^3CT) = 5\ cm^{-1}$ (0,6 meV) beträgt. Somit repräsentiert Beispielmolekül **2** ein

erfindungsgemäßes organisches Molekül.

Die chemische Synthese des Beispielmoleküls **2** ist ausgehend von im Handel erhältlichen Edukten im folgenden Reaktionsschema erläutert.

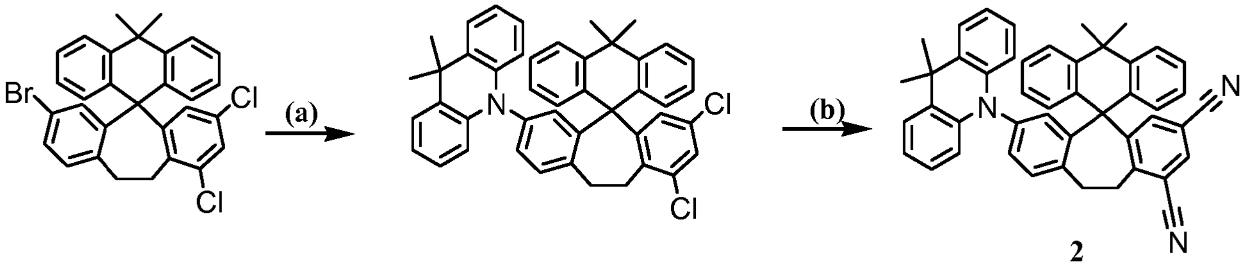


**2**

Reaktanden und Reaktionsbedingungen:

(a) 9,9-Dimethyl-9,10-dihydroacridin, $Pd(CH_3COO)_2$, $P[(C(CH_3)_3]_3$, $(CH_3)_3CONa$, 90 0C, 19 h.
(b) $Zn(CN)_2$, 1,1'-Bis(diphenylphosphino)ferrocen, [1,1'-Bis(diphenylphosphino)ferrocen] dichlorpalladium(II), Komplex mit Dichlormethan, N-Methyl-2-pyrrolidon,180 °C, 12 h.

**Beispiel 3**

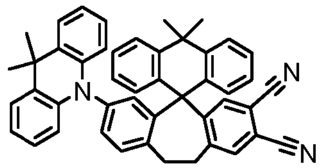

Beispielmolekül **3**

Die in Figur 12 gezeigten Grenzorbitale lassen erkennen, dass HOMO und LUMO in deutlich verschiedenen Raumbereichen des Moleküls lokalisiert sind. Das lässt erwarten, dass die Aufspaltung zwischen dem untersten dem untersten Triplett-CT- und dem darüber liegenden Singulett-CT-Zustand klein ist. Eine Rechnung für das Beispielmolekül **3** im Rahmen einer TD-DFT-Rechnung (Funktional B3LYP; Basissatz 6-31G(d,p)) zeigt, dass diese Energiedifferenz für die optimierte Singulett-Geometrie $\Delta E(^1CT^3CT) = 5\ cm^{-1}$ (0,6 meV) beträgt. Somit repräsentiert Beispielmolekül **3** ein erfindungsgemäßes organisches Molekül.

Die chemische Synthese des Beispielmoleküls **3** ist ausgehend von im Handel erhältlichen Edukten im folgenden Reaktionsschema erläutert.

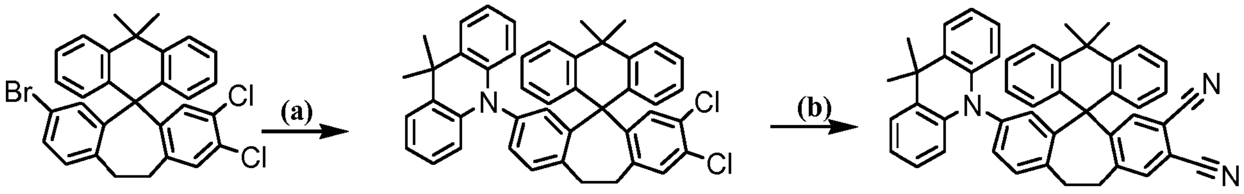


**3**

Reaktanden und Reaktionsbedingungen:

(a) 9,9-Dimethyl-9,10-dihydroacridin, $Pd(CH_3COO)_2$, $P[(C(CH_3)_3]_3$, $(CH_3)_3CONa$, 90 0C, 19 h.
(b) $Zn(CN)_2$, 1,1'-Bis(diphenylphosphino)ferrocen, [1,1'-Bis(diphenylphosphino)ferrocen] dichlorpalladium(II), Komplex mit Dichlormethan, N-Methyl-2-pyrrolidon, 180 °C, 12 h.

**Beispiel 4**

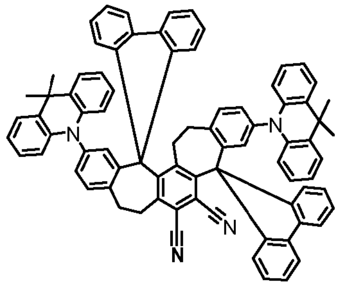

**Beispielmolekül 4**

Eine Rechnung für das Beispielmolekül **4** im Rahmen einer TD-DFT-Rechnung (Funktional B3LYP; Basissatz 6-31G(d,p)) zeigt, dass die Energiedifferenz für die optimierte Triplett-Geometrie $\Delta E(^1CT\text{-}^3CT)$ = 8 $cm^{-1}$ (1 meV) beträgt. Somit repräsentiert Beispielmolekül **4** ein erfindungsgemäßes organisches Molekül.

Die chemische Synthese des Beispielmoleküls **4** ist ausgehend von im Handel erhältlichen Edukten im folgenden Reaktionsschema erläutert.

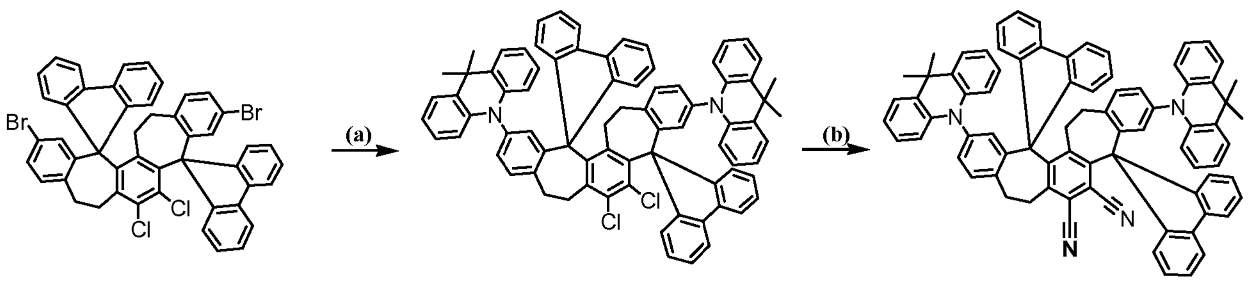


4

Reaktanden und Reaktionsbedingungen:

(a) 9,9-Dimethyl-9,10-dihydroacridin, $Pd(CH_3COO)_2$, $P[(C(CH_3)_3]_3$, $(CH_3)_3CONa$, 90 °C, 19 h.
(b) $Zn(CN)_2$, 1,1'-Bis(diphenylphosphino)ferrocen, [1,1'-Bis(diphenylphosphino)ferrocen] dichlorpalladium(II), Komplex mit Dichlormethan, N-Methyl-2-pyrrolidon, 180 °C, 12 h.

**Beispiel 5**

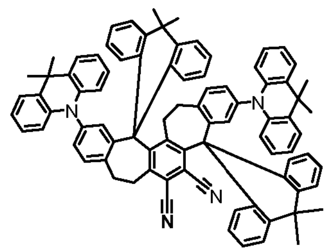

**Beispielmolekül 5**

Eine Rechnung für das Beispielmolekül **5** im Rahmen einer TD-DFT-Rechnung (Funktional B3LYP; Basissatz 6-31G(d,p)) zeigt, dass die Energiedifferenz für die optimierte Triplett-Geometrie $\Delta E(^1CT\text{-}^3CT)$ = 9 $cm^{-1}$ (1,1 meV) beträgt. Somit repräsentiert Beispielmolekül 5 ein erfindungsgemäßes organisches Molekül.

Die chemische Synthese des Beispielmoleküls **5** ist ausgehend von im Handel erhältlichen Edukten im folgenden Reaktionsschema erläutert.

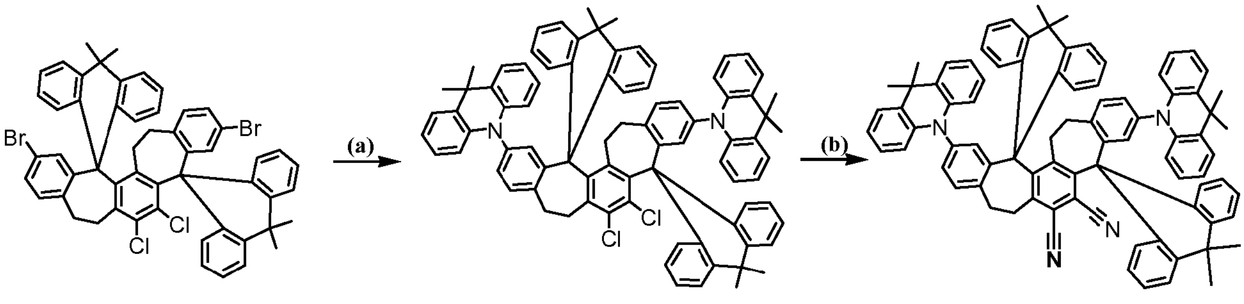


5

Reaktanden und Reaktionsbedingungen:

(a) 9,9-Dimethyl-9,10-dihydroacridin, $Pd(CH_3COO)_2$, $P[(C(CH_3)_3]_3$, $(CH_3)_3CONa$, 90 °C, 19 h.
(b) $Zn(CN)_2$, 1,1'-Bis(diphenylphosphino)ferrocen, [1,1'-Bis(diphenylphosphino)ferrocen] dichlorpalladium(II), Komplex mit Dichlormethan, N-Methyl-2-pyrrolidon, 180 °C, 12 h.

**Beispiel 6**

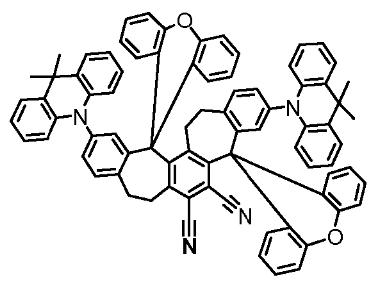

**Beispielmolekül 6**

Eine Rechnung für das Beispielmolekül **6** im Rahmen einer TD-DFT-Rechnung (Funktional B3LYP; Basissatz 6-31G(d,p)) zeigt, dass die Energiedifferenz für die optimierte Triplett-Geometrie $\Delta E(^1CT-^3CT)$ = 12 $cm^{-1}$ (1,5 meV) beträgt. Somit repräsentiert Beispielmolekül **6** ein erfindungsgemäßes organisches Molekül.

Die chemische Synthese des Beispielmoleküls **6** ist ausgehend von im Handel erhältlichen Edukten im folgenden Reaktionsschema erläutert.

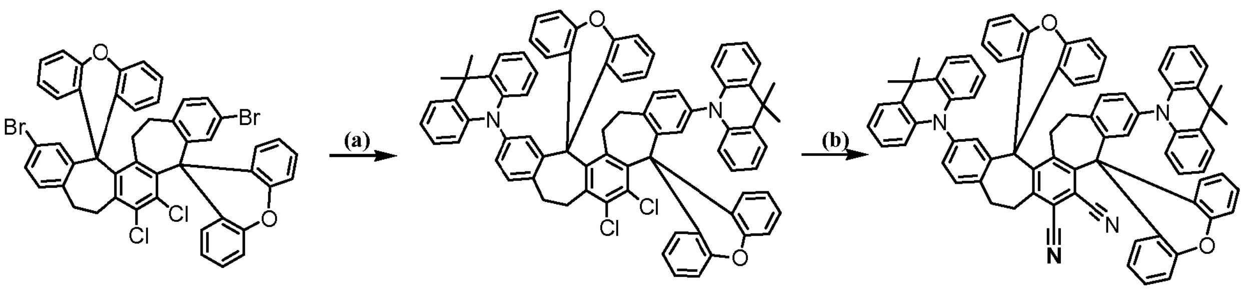


6

Reaktanden und Reaktionsbedingungen:

(a) 9,9-Dimethyl-9,10-dihydroacridin, $Pd(CH_3COO)_2$, $P[(C(CH_3)_3]_3$, $(CH_3)_3CONa$, 90 °C, 19 h.
(b) Zn(CN)2, 1,1'-Bis(diphenylphosphino)ferrocen, [1,1'-Bis(diphenylphosphino)ferrocen] dichlorpalladium(II), Komplex mit Dichlormethan, N-Methyl-2-pyrrolidon, 180 °C, 12 h.

In Figur 13 sind weitere erfindungsgemäße Beispielmoleküle gezeigt.

**Figuren**

**Figur 1:** Energieniveauschema zur Veranschaulichung des Prozesses der thermisch aktivierten verzögerten (delayed) Fluoreszenz (TADF). $k_BT$ repräsentiert die thermische Energie mit $k_B$ der Boltzmannkonstanten und T der absoluten Temperatur. Das Diagramm zeigt den radiativen TADF-Prozess und die bei tiefer Temperatur beobachtbaren strahlenden und nicht-strahlenden (gewellt dargestellt) Desaktivierungsprozesse aus dem $T_1$-Zustand. Der Prozess der spontanen $S_{1\rightarrow}S_0$ Fluoreszenz ist im Diagramm nicht eingezeichnet.

**Figur 2:** Einfluss der Polarität des Lösungsmittels auf die energetische Lage der $^1$CT-Emission des gelösten Beispielmoleküls 1 für T = 300 K. Die Abbildung zeigt die Rot-Verschiebung der Emissionsspektren mit wachsender Polarität des Lösungsmittels (quantifiziert durch die Dielektrizitätskonstante $\varepsilon$).

**Figur 3:** Isoflächen der Grenzorbitale für das Beispielmolekül **1** (s. Beispiel 1), HOMO: links, LUMO: rechts. Es erfolgten Geometrie-Optimierungen für den elektronischen Grundzustand So. Rechnungsmethoden: DFT und TD-DFT, Funktional: B3LYP, Basissatz: 6-31G(d,p), Rechnungssoftware: Gaussian 09. Die Rechnungen ergeben für die Energiedifferenz zwischen dem Singulett-CT-Zustand und dem Triplett-CT-Zustand 7 $cm^{-1}$ ($T_1$-Geometrie). Dieser Wert zeigt, dass Beispiel **1** ein guter Emitter für die Verwendung in optoelektronischen Vorrichtungen ist.

**Figur 4:** Perspektivische Darstellung von Beispielmolekül **1,** die sich aus einer Röntgenstrukturbestimmung ergibt. Der für die Strukturanalyse verwendete Einzelkristall wurde durch langsames Eindiffundieren von Hexan in eine gesättigte Dichlormethan-Lösung von **1** gezogen.

**Figur 5:** Emissions- und Anregungsspektrum der in Toluol gelösten Beispielsubstanz **1** ($c \approx 10^{-5}$ M). Durch Einleiten von Stickstoff über 120 Minuten wurde der Rest-Sauerstoff aus der Lösung entfernt. Die Emissionsquantenausbeute betrug danach $\Phi_{PL}$ = 65 %. Anregung 310 nm, Detektion 468 nm.

**Figur 6:** TADF-Abklingzeit des Beispielmoleküls **1** in Toluol gelöst und Stickstoff-gespült (T = 300K, $c \approx 10^{-5}$ M). Anregung 310 nm, Pulsdauer 10 ns. Der gemessene Wert von $\tau$ = 420 ns repräsentiert die kürzeste Abklingzeit, die deutlich kürzer ist, als die bisher gemessene kürzeste TADF-Abklingzeit.

**Figur 7:** **(a)** Emissionsspektrum von Beispielmolekül **1** in Diethylether ($c \approx 10^{-5}$ M). Die Emission stellt eine mit dem $^3$CT-Zustand equilibrierte $^1$CT-Fluoreszenz dar mit einer Abklingzeit von $\tau$ = 960 ns **(b).** Die Probe wurde über 120 Minuten mit Stickstoff gespült. Anregung: Spektrum **(a):** 310 nm (cw-LED); Abklingkurve **(b):** 310 nm (LED gepulst). Temperatur T = 300 K.

**Figur 8:** Emissionsspektrum von Beispielmolekül **1** in einer festen TADF-Matrix (siehe Text) ($c \approx 10$ Gew.-%). Die Emission repräsentiert eine mit dem $^3$CT-Zustand equilibrierte Fluoreszenz mit einer Abklingzeit von 530 ns. Die Probe wurde sorgfältig entgast. Anregung: 310 nm (cw-LED). Temperatur T = 300 K.

**Figur 9:** Emissionsspektren von Beispielmolekül **1** in einer festen TADF-Matrix (siehe Text) ($c \approx 10$ Gew.-%) für verschiedene Temperaturen (Spektren normiert). Die Emissionsspektren verändern sich mit Abkühlung nur geringfügig. Die Abklingzeiten verlängern sich von 530 ns (300 K) auf $\approx 1\mu s$ (10 K). Die radiative Rate verändert sich bei Abkühlung nur geringfügig.

**Figur 10:** Energieniveauschema zur Erläuterung des Emissionsverhaltens von Beispielmolekül 1 in einer polaren Matrix wie Diethylether oder der oben beschriebenen TADF-Matrix. Der lokalisierte $^3$LE-Zustand liegt energetisch oberhalb der $^{1,3}$CT-Zustände. Die Zustände können quantenmechanische Mischungen aufweisen, und zwar können der $^3$LE-Zustand und der $^1$CT-Zustand über Spin-Bahn-Kopplung (SOC) mischen, während die beiden Triplett-Zustände durch Konfigurationswechselwirkung (CI) interagieren können. Das führt zu einem schnellen Intersystem Crossing (ISC) zwischen dem $^1$CT- und dem $^3$CT-Zustand. Als Folge wird - auch bei tiefen Temperaturen - nur eine mit dem $^3$CT-Zustand equilibrierte $^1$CT-Fluoreszenz beobachtet, aber weder eine $^3$CT-Phosphoreszenz noch eine TADF.

**Figur 11:** Isoflächen der Grenzorbitale für das Beispielmolekül **2** (s. Beispiel 2), HOMO: links, LUMO: rechts. Es erfolgten Geometrie-Optimierungen für den elektronischen Grundzustand $S_0$. Rechnungsmethoden: DFT

und TD-DFT, Funktional: B3LYP, Basissatz: 6-31G(d,p), Rechnungssoftware: Gaussian 09. Die Rechnungen ergeben für die Energiedifferenz zwischen dem Singulett-CT-Zustand und dem Triplett-CT-Zustand 5 $cm^{-1}$ (0,6 meV) ($S_0$-Geometrie).

**Figur 12:** Isoflächen der Grenzorbitale für das Beispielmolekül **3** (s. Beispiel 3), HOMO: links, LUMO: rechts. Es erfolgten Geometrie-Optimierungen für den elektronischen Grundzustand $S_0$. Rechnungsmethoden: DFT und TD-DFT, Funktional: B3LYP, Basissatz: 6-31G(d,p), Rechnungssoftware: Gaussian09. Die Rechnungen ergeben für die Energiedifferenz zwischen dem Singulett-CT-Zustand und dem Triplett-CT-Zustand 5 $cm^{-1}$ (0,6 meV) ($S_0$-Geometrie).

**Figur 13:** Weitere Beispiele erfindungsgemäßer organischer Emittermoleküle, die für die Verwendung in optoelektronischen Vorrichtungen geeignet sind.

## Patentansprüche

1. Optoelektronische Vorrichtung, in der nach Anregung eines organischen Moleküls direkte und schnelle Relaxations- und Intersystem-Crossing-Prozesse zur Besetzung des Charge Transfer-Singulett-Zustandes ($^1$CT) aus dem im Vergleich zu der bei Raumtemperatur vorliegenden thermischen Energie von $k_BT$ = 210 $cm^{-1}$ im Wesentlichen isoenergetischen Charge Transfer-Triplett- Zustand ($^3$CT) des organischen Moleküls erfolgen, so dass eine $^1CT \rightarrow S_0$ Fluoreszenz auftritt, , wobei $S_0$ für den elektronischen Grundzustand steht, wobei das organische Moleküle eine Struktur nach Formel Ia oder Ib aufweist oder aus einer Struktur nach Formel Ia oder Ib besteht

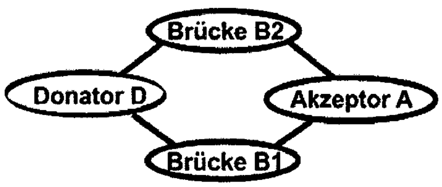


**Formel Ia**

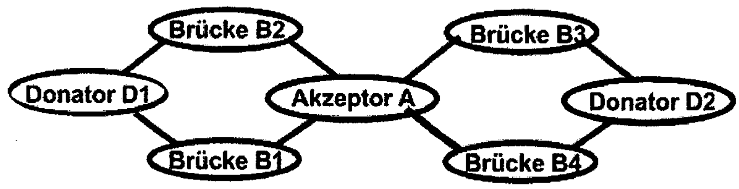


**Formel Ib**

mit einem aromatischen oder hetero-aromatischen Donator-Segment D, D1, D2 und
einem über zwei oder vier nicht-konjugierte Brücken B1, B2, B3 und B4 gebundenen aromatischen oder hetero-aromatischen Akzeptor-Segment A,
wobei die aromatischen oder hetero-aromatischen Molekülteile (Donator oder Akzeptor) mit elektronen-schiebenden oder -ziehenden Substituenten substituiert sind,
wobei die Brücken B1, B2, B3, B4 derart gewählt sind, dass sie ausgeprägte Überlappungen vom Donator-HOMO mit dem Akzeptor-LUMO verhindern,
wobei das organische Molekül eine Struktur nach einer der im Folgenden gezeigten Formeln aufweist oder aus einer derartigen Struktur besteht

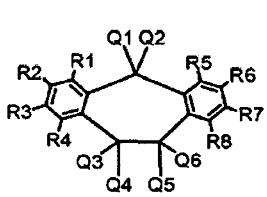

**Formel IIa**

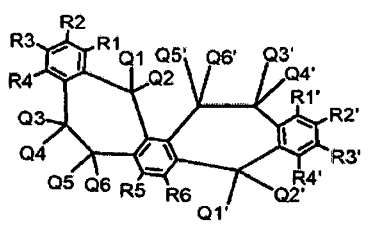

**Formel IIb**

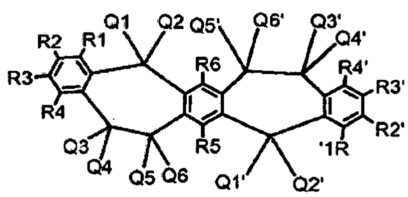

**Formel IIc**

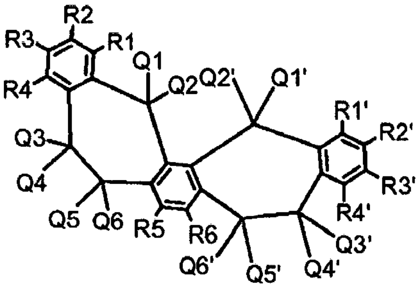

**Formel IId**

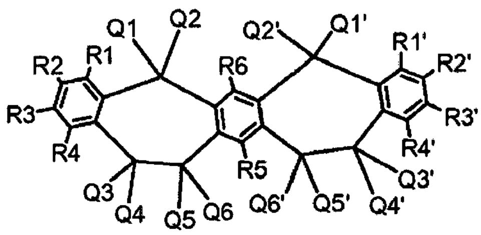

**Formel IIe**

Wobei das 2,3:6,7-Dibenzosuberan Grundgerüst derart substituiert ist, dass die elektronischen Eigenschaften der aromatischen Ringsysteme so verändert werden, dass der mit R1 bis R4 substituierte Molekülteil zum Donatorteil D bzw. die mit R1 bis R4 und R1' bis R4' substituierten Molekülteile zu Donatorteilen D1 und D2 im Sinne der Formeln Ia und Ib werden und der mit R5 bis R8 substituierte Molekülteil zum Akzeptorteil A wird, wobei die mit Q1 bis Q6 substituierten Methylen- und Ethylen-Gruppen des 2,3:6,7-Dibenzosuberans die Brücken B1 bzw. B2 der Formel Ia und die mit Q1 bis Q6 sowie Q1' bis Q6' substituierten Methylen- und Ethylen-Gruppen des 2,3:6,7-Dibenzosuberans die Brücken B1 bzw. B2 und B3 bzw B4 der Formeln Ib repräsentieren, mit Brücken:

Q1, Q2, Q1' und Q2' sind unabhängig voneinander ausgewählt aus der Gruppe bestehend aus Alkyl, Alkenyl, Alkinyl, Cycloalkyl und Aryl;
Q3 bis Q6 und Q3' bis Q6' sind unabhängig voneinander ausgewählt aus der Gruppe bestehend aus H, Alkyl, Alkenyl, Alkinyl, Cycloalkyl und Aryl; dabei ist:

Alkyl ein geradkettiges (unverzweigtes) oder verzweigtes ($C_1$-$C_{10}$)-Alkyl, das 1 bis 10 Kohlenstoffatome in der Hauptkohlenwasserstoffkette aufweist,
Alkenyl ein geradkettiges oder verzweigtes ($C_1$-$C_{10}$)-Alkenyl, das 1 bis 10 Kohlenstoffatome in der Hauptkohlenwasserstoffkette aufweist,
Alkinyl ein geradkettiges oder verzweigtes ($C_1$-$C_{10}$)-Alkinyl, das 1 bis 10 Kohlenstoffatome in der Hauptkohlenwasserstoffkette aufweist,
Cycloalkyl ein ($C_3$-$C_7$)-Cykloalkyl, das 3 bis 7 Ring-Kohlenstoffatome aufweist, und Aryl eine 5-Ring- oder 6-Ring aromatische oder heteroaromatische Gruppe,
wobei unter "Hauptkohlenwasserstoffkette" hier die längste Kette des verzweigten oder nichtgeradkettigen Alkyls, Alkenyls oder Alkinyls verstanden wird; wobei
jede Gruppe Q1 bis Q6 und Q1' bis Q6' unabhängig voneinander unsubstituiert oder mit einem oder mehreren F, Cl, Br, Alkoxyl, Thioalkoxyl, Amin, Silan, Phosphan, Boran oder Aryl substituiert sein kann;
die Gruppen Q1 und Q2, die Gruppen Q3 und Q4, die Gruppen Q5 und Q6, die Gruppen Q1' und Q2', die Gruppen Q3' und Q4', sowie die Gruppen Q5' und Q6', optional miteinander chemisch verknüpft sind, so dass weitere Ringsysteme entstehen;

Donatorteil:

R1 bis R4 und R1' bis R4' sind unabhängig voneinander ausgewählt aus der Gruppe bestehend aus H, Alkyl, Alkenyl, Alkinyl, Cycloalkyl, Alkoxyl, Thioalkoxyl, Amin, Phosphan, Silan, Boran, Fluor, Chlor, Brom und der unten anhand Formel III definierten Gruppe Akr, wobei in Formel IIa zumindest eine Position von R1 bis R4 Akr ist und in den Formeln IIb bis IIe zumindest eine Position von R1 bis R4 Akr und zumindest eine Position von R1' bis R4' Akr ist, dabei sind:
Alkyl ein geradkettiges oder verzweigtes ($C_1$-$C_{10}$)-Alkyl, das 1 bis 10 Kohlenstoffatome in der Hauptkohlenwasserstoffkette aufweist,
Alkenyl ein geradkettiges oder verzweigtes ($C_1$-$C_{10}$)-Alkenyl, das 1 bis 10 Kohlenstoffatome in der Hauptkohlenwasserstoffkette aufweist,
Alkinyl ein geradkettiges oder verzweigtes ($C_1$-$C_{10}$)-Alkinyl, das 1 bis 10 Kohlenstoffatome in der Hauptkohlenwasserstoffkette aufweist,
Cycloalkyl ein ($C_3$-$C_7$)-Cykloalkyl, das 3 bis 7 Ring-Kohlenstoffatome aufweist, und Aryl eine 5-Ring- oder 6-Ring- aromatische oder heteroaromatische Gruppe,

wobei es sich bei den Substitutionen Alkoxyl, Thioalkoxyl, Amin, Phosphan, Silan und Boran jeweils um ein Alkoxyl O-R', Thioalkoxyl S-R', Amin N-R'R", Phosphan P-R'R", Silan SiR'R"R"' und Boran BR'R" handelt, wobei R', R" und R'" unabhängig voneinander ein geradkettiges oder verzweigtes ($C_1$-$C_{10}$)-Alkyl, ($C_1$-$C_{10}$)-Alken, ($C_1$-$C_{10}$)-Alkin, ($C_3$-$C_7$)-Cycloalkyl oder eine 5-Ring- oder 6-Ring aromatische bzw. heteroaromatische Gruppe bedeuten; wobei die Gruppe Akr eine Struktur der Formel IIIa und IIIb aufweist oder daraus besteht:

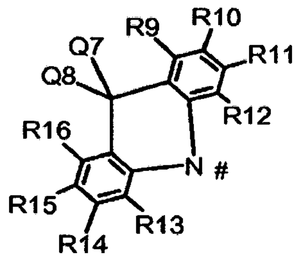

**Formel IIIa**

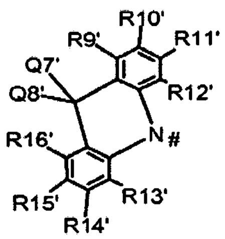

**Formel IIIb**

darin: markiert # die Stelle, über die die Akr Gruppe mit dem Rest des Moleküls verbunden ist, R9 bis R16 und R9' bis R16' sind unabhängig voneinander H, ($C_1$-$C_{10}$)-Alkyl, ($C_1$-$C_{10}$)-Alkenyl, ($C_1$-$C_{10}$)-Alkinyl, ($C_3$-$C_7$)-Cycloalkyl, Alkoxyl O-R', Amin N-R'R", Phosphan PR'R", Silan SiR'R"R"', Boran BR'R", Fluor, Chlor, Brom oder Aryl, wobei die Reste R', R" und R'" ein geradkettiges oder verzweigtes ($C_1$-$C_{10}$)-Alkyl, ($C_1$-$C_{10}$)-Alken, ($C_1$-$C_{10}$)-Alkin, ($C_3$-$C_7$)-Cycloalkyl oder eine 5-Ring- oder 6-Ring aromatische bzw. heteroaromatische Gruppe bedeuten; Q7, Q8, Q7' und Q8' sind wie Q1 bis Q6 und Q1' bis Q6' definiert und können miteinander verknüpft sein, so dass ein weiteres Ringsystem entsteht;

Akzeptorteil: R5 bis R8 sind unabhängig voneinander H, CH3, CN, COR', CO(OR'), CO(NR'R"), SO2R', SO2(OR'), SOR', CF3, CF2R', wobei R' und R" geradkettiges oder verzweigtes ($C_1$-$C_{10}$)-Alkyl, ($C_1$-$C_{10}$)-Alken, ($C_1$-$C_{10}$)-Alkin, ($C_3$-$C_7$)-Cycloalkyl oder eine 5-Ring- oder 6-Ring aromatische oder heteroaromatische Gruppe bedeuten, und zumindest eine Gruppe nicht H oder $CH_3$ ist,

wobei optional in Formel IIa zumindest zwei Substituenten ausgewählt aus R5, R6, R7 und R8 kein H und kein $CH_3$ sind;

wobei optional zwei benachbarte Gruppen ausgewählt aus R5, R6, R7 und R8 miteinander chemisch verbunden sind,

wobei das organische Molekül eine Struktur nach den Formeln IVa bis IVd aufweist oder daraus besteht

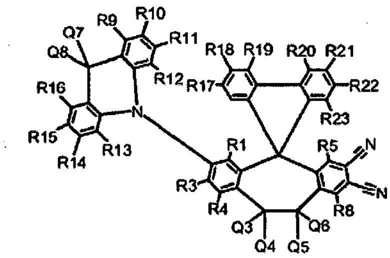

**Formel IVa**

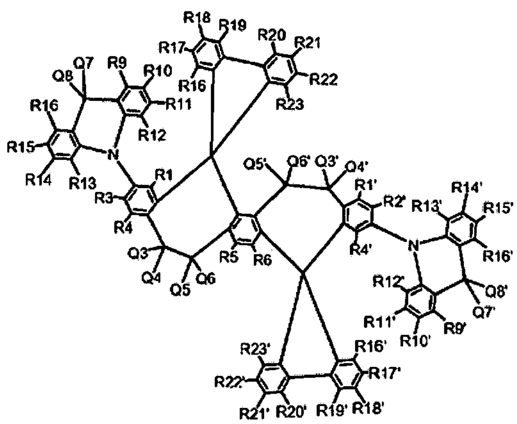

**Formel IVb**

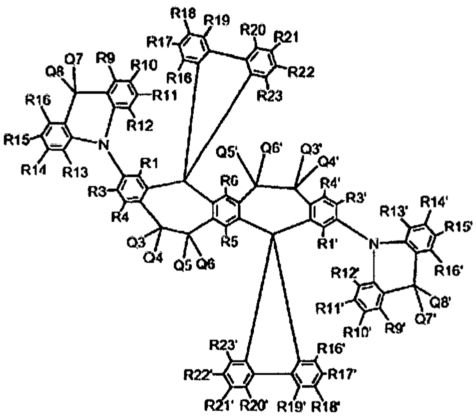

**Formel IVc**

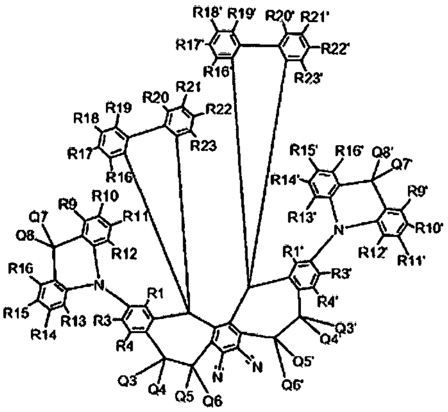

**Formel IVd**

wobei die Substituenten R1 bis R8, R1' bis R8', Q3 bis Q6 und Q3' bis Q6' unter den Formeln IIa bis IIe und die Substituenten R9 bis R16 und Q7 bis Q8 unter den Formeln IIIa und IIIb erläutert sind, wobei R16 bis R23 und R16' bis R23' wie R9 bis R16 und R9' bis R16' definiert sind.

2. Optoelektronische Vorrichtung nach Anspruch 1,
wobei die direkte schnelle Besetzung des CT-Singulett-Zustandes im Vergleich zu Molekülen, die thermisch aktivierte verzögerte Fluoreszenz (TADF) zeigen, dazu führt, dass die Emissionsabklingzeit aus diesem CT-Singulett-Zustand 5 mal bis 10 mal schneller erfolgt.

3. Optoelektronische Vorrichtung nach Anspruch 1 oder 2,
wobei die Emissionsabklingzeit des organischen Moleküls unter 2 $\mu$s, insbesondere unter 1 $\mu$s oder unter 500 ns liegt.

4. Optoelektronische Vorrichtung nach Anspruch 1 bis 3, wobei die auftretende Emission keine TADF-Emission darstellt.

5. Optoelektronische Vorrichtung nach Anspruch 1 bis 4, wobei die $^1$CT-Fluoreszenz eine mit dem im Wesentlichen iso-energetischen Charge Transfer-Triplett ($^3$CT)-Zustand equilibrierte Fluoreszenz aus dem $^1$CT-Singulett-Zustand ist.

6. Optoelektronische Vorrichtung nach Anspruch 1, wobei das organische Molekül eine Struktur nach Formel V aufweist oder daraus besteht

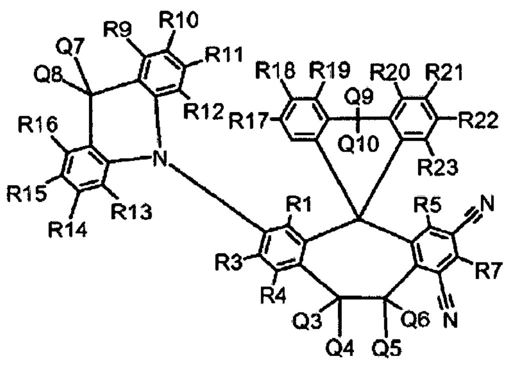

**Formel V**

wobei die Substituenten R1 bis R23 und Q3 bis Q8 unter den Formeln IIa bis IIe, III, IIIb und IVa bis IVd erläutert sind und
Q9 und Q10 wie Q1 bis Q8 und Q1' bis Q8' definiert sind und optional miteinander verknüpft sind, so dass ein weiteres Ringsystem entsteht.

7. Optoelektronische Vorrichtung nach Anspruch 1, wobei das organische Molekül eine Struktur nach Formel VI auf-

weist oder daraus besteht

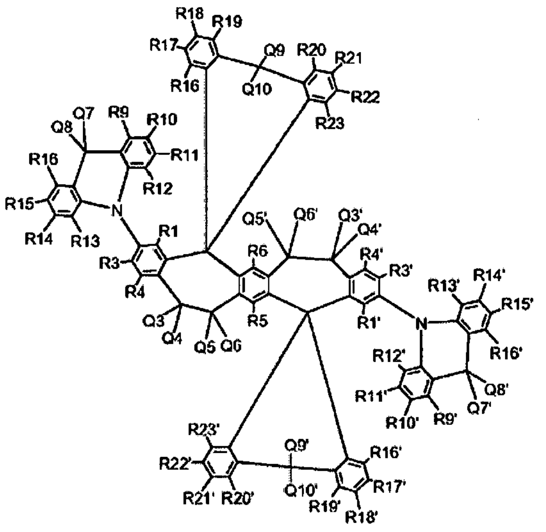

**Formel VI**

wobei die Substituenten R1 bis R23, R1' bis R23', Q3 bis Q10 und Q3' bis Q8' unter den Formeln IIa bis IIe, III, IIIb, IVa bis IVd und V erläutert sind und
wobei Q9' und Q10' wie Q1 bis Q10 und Q1' bis Q8' definiert sind und optional miteinander verknüpft sind, so dass ein weiteres Ringsystem entsteht.

**8.** Optoelektronische Vorrichtung nach Anspruch 1, wobei das organische Molekül eine Struktur nach den Formeln VII bis XVI aufweist oder daraus besteht

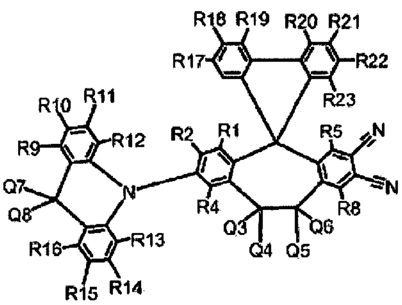

**Formel VII**

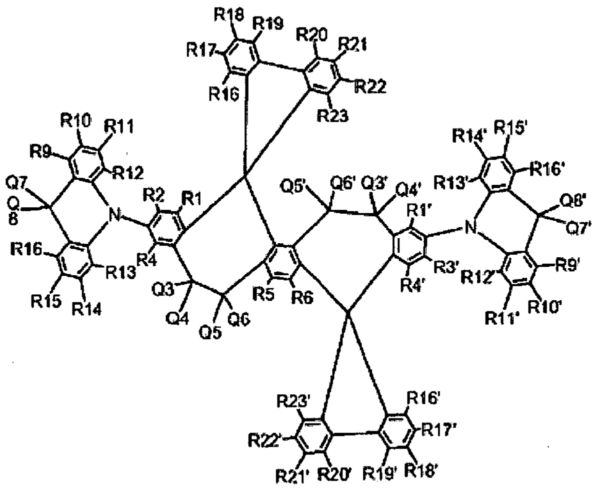

**Formel VIII**

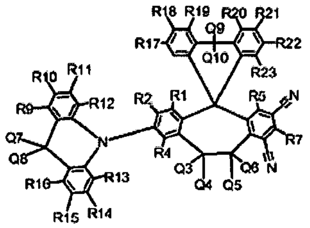

Formel IX

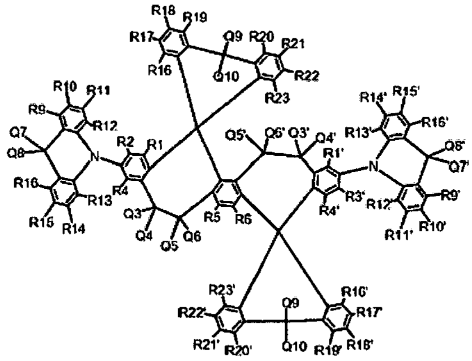

Formel X

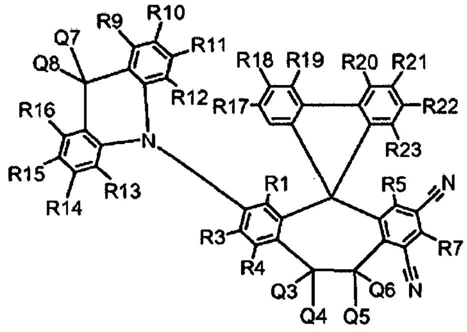

Formel XI

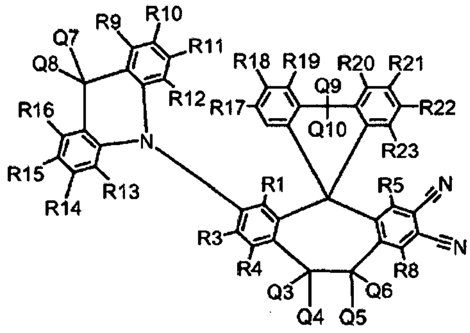

Formel XII

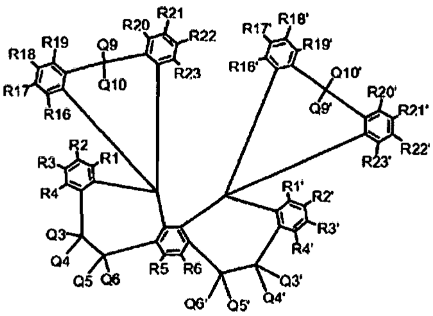

Formel XIII

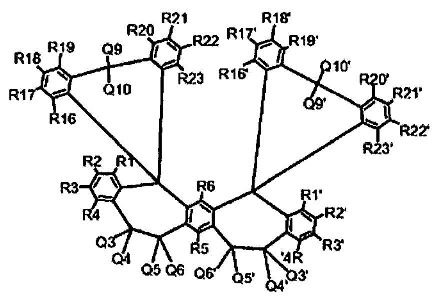

Formel XIV

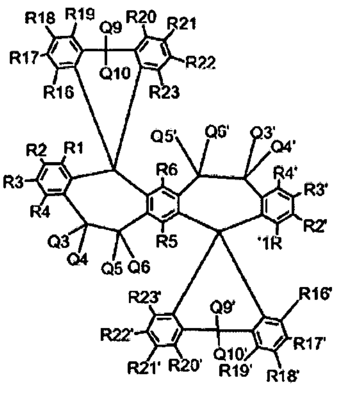

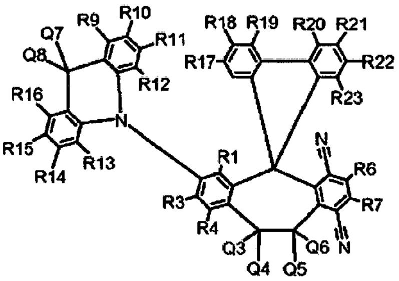

Formel XVI

Formel XV

wobei die Substituenten wie oben definiert sind.

9. Optoelektronische Vorrichtung nach Anspruch 1, wobei zusätzlich die Wasserstoffatome in einer, mehreren oder in allen Positionen des organischen Moleküls durch Deuterium ersetzt sind.

10. Organisches Molekül, aufweisend eine Struktur oder bestehend aus einer Struktur nach einer Formel, die ausgewählt ist aus der Gruppe bestehend aus Formel Ia, Formel Ib, Formel IIa, Formel IIb, Formel IIc, Formel IId, Formel IIe, Formel lila, Formel IIIb, Formel IVa, Formel IVb, Formel IVc, Formel IVd, Formel V, Formel VI, Formel VII, Formel VIII, Formel IX, Formel X, Formel XI, Formel XII, Formel XIII, Formel XIV, Formel XV und Formel XVI, wobei die Wasserstoffatome in einer, mehreren oder in allen Positionen der organischen Moleküls der vorgenannten Formeln durch Deuterium ersetzt sind.

11. Verwendung eines organischen Moleküls nach Anspruch 10 zur Emission von Licht, insbesondere in einer Emitterschicht einer optoelektronischen Vorrichtung.

12. Verfahren zur Herstellung einer optoelektronischen Vorrichtung, wobei ein organisches Molekül nach Anspruch 10 verwendet wird.

13. Optoelektronische Vorrichtung nach Anspruch 1 bis 9, organisches Molekül nach Anspruch 10, Verwendung nach Anspruch 11, Verfahren nach Anspruch 12,
wobei die optoelektronische Vorrichtung ausgewählt ist aus der Gruppe bestehend aus organischen lichtemittierenden Dioden (OLEDs), lichtemittierenden elektrochemischen Zellen (LEECs oder LECs), OLED-Sensoren, insbesondere nicht hermetisch nach außen abgeschirmten Gas- und Dampf-Sensoren, optischen Temperatur-Sensoren, organischen Solarzellen (OSCs), organischen Feldeffekttransistoren, organischen Lasern, organischen Dioden, organischen Fotodioden und "down conversion" Systemen.

## Claims

1. Optoelectronic device in which, upon excitation of an organic molecule, direct and rapid relaxation and intersystem crossing processes occur for filling the charge transfer singlet state ($^1CT$) from the charge transfer triplet state ($^3CT$) of the organic molecule, which is substantially isoenergetic compared to the thermal energy of $k_BT = 210\ cm^{-1}$ that is present at ambient temperature, such that a $^1CT \rightarrow So$ fluorescence occurs, wherein So denotes the electron ground state, wherein the organic molecule comprises or consists of a structure according to Formula Ia or Ib

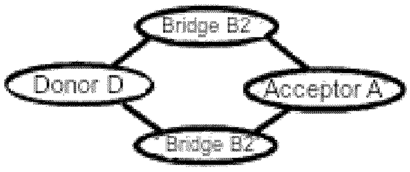

Formula Ia

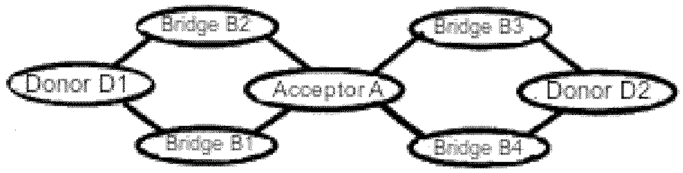

Formula Ib

with an aromatic or heteroaromatic donor segment D, D1, D2 and an aromatic or heteroaromatic acceptor segment A bonded via two or four non-conjugated bridges B1, B2, B3 and B4,
wherein the aromatic or heteroaromatic moieties (donor or acceptor) are substituted with electron-donating or -withdrawing substituents,
wherein the bridges B1, B2, B3, B4 are selected such that they prevent pronounced overlaps of the donor HOMO with the acceptor LUMO,
wherein the organic molecule comprises or consists of a structure according to one of the formulae shown below

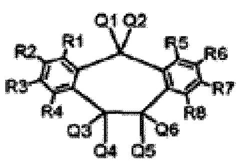
Formula IIa

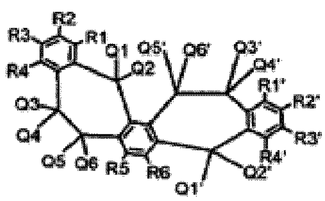
Formula IIb

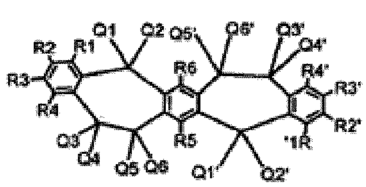
Formula IIc

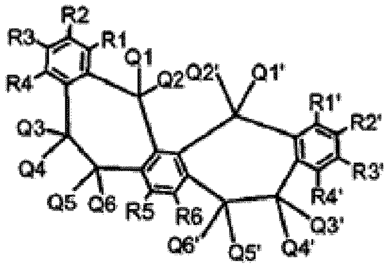

Formula IId

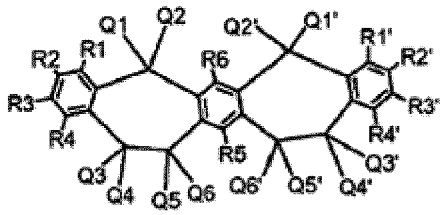

Formula IIe

wherein the 2,3:6,7-dibenzosuberane backbone is substituted such that the electronic properties of the aromatic ring systems are modified such that the R1- to R4-substituted moiety becomes the donor segment D or the R1- to R4- and R1'- to R4'-substituted moieties become donor segments D1 and D2 within the meaning of Formulae Ia and Ib, and the R5- to R8-substituted moiety becomes the acceptor segment A, wherein the Q1- to Q6-substituted methylene and ethylene groups of the 2,3:6,7-dibenzosuberane represent the bridges B1 and B2 of Formula Ia and the Q1- to Q6-and Q1'- to Q6'-substituted methylene and ethylene groups of the 2,3:6,7-dibenzosuberane represent the bridges B1 and B2, and B3 and B4, of Formulae Ib, with bridges:

Q1, Q2, Q1' and Q2' are selected independently of each other from the group consisting of alkyl, alkenyl, alkynyl, cycloalkyl and aryl; where
alkyl is a linear (unbranched) or branched ($C_1$-$C_{10}$) alkyl having 1 to 10 carbon atoms in the main hydrocarbon chain,
alkenyl is a linear or branched ($C_1$-$C_{10}$) alkenyl having 1 to 10 carbon atoms in the main hydrocarbon chain,
alkynyl is a linear or branched ($C_1$-$C_{10}$) alkynyl having 1 to 10 carbon atoms in the main hydrocarbon chain,
cycloalkyl is a ($C_3$ -$C_7$) cycloalkyl having 3 to 7 ring-carbon atoms, and aryl is a 5-ring or 6-ring aromatic or heteroaromatic group,
wherein "main hydrocarbon chain" here is understood to mean the longest chain of the branched or non-linear alkyl, alkenyl or alkynyl; wherein
each group Q1 to Q6 and Q1' to Q6' independently of each other can be unsubstituted or can be substituted with one or more F, Cl, Br, alkoxy, thioalkoxy, amine, silane, phosphane, borane or aryl;
the groups Q1 and Q2, the groups Q3 and Q4, the groups Q5 and Q6, the groups Q1' and Q2', the groups Q3' and Q4', and the groups Q5' and Q6' are optionally chemically linked together such that further ring systems are formed;
Donor segment:
R1 to R4 and R1' to R4' are selected independently of each other from the group consisting of H, alkyl, alkenyl, alkynyl, cycloalkyl, alkoxy, thioalkoxy, amine, phosphane, silane, borane, fluorine, chlorine, bromine and the group Akr defined below with reference to Formula III, wherein in Formula IIa at least one position of R1 to R4 is Akr and in Formulae IIb to lie at least one position of R1 to R4 is Akr and at least one position of R1' to R4' is Akr, where:

alkyl is a linear or branched ($C_1$-$C_{10}$) alkyl having 1 to 10 carbon atoms in the main hydrocarbon chain,
alkenyl is a linear or branched ($C_1$-$C_{10}$) alkenyl having 1 to 10 carbon atoms in the main hydrocarbon chain,
alkynyl is a linear or branched ($C_1$-$C_{10}$) alkynyl having 1 to 10 carbon atoms in the main hydrocarbon chain,
cycloalkyl is a ($C_3$-$C_7$) cycloalkyl having 3 to 7 ring-carbon atoms, and aryl is a 5-ring or 6-ring aromatic or heteroaromatic group,
wherein the substitutions alkoxy, thioalkoxy, amine, phosphane, silane and borane are respectively an alkoxy O-R', thioalkoxy S-R', amine N-R'R", phosphane P-R'R", silane SiR'R"R"' and borane BR'R", wherein R', R" and R"' independently of each other signify a linear or branched ($C_1$-$C_{10}$) alkyl, ($C_1$-$C_{10}$) alkene, ($C_1$-$C_{10}$) alkyne, ($C_3$-$C_7$) cycloalkyl or a 5-ring or 6-ring aromatic or heteroaromatic group;
wherein the group Akr comprises or consists of a structure of Formulae IIIa and IIIb:

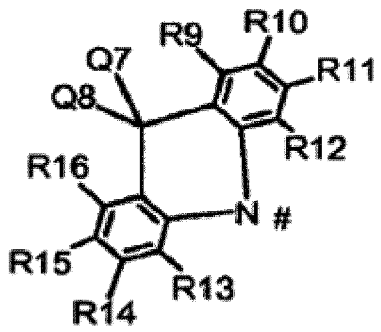

Formula IIIa

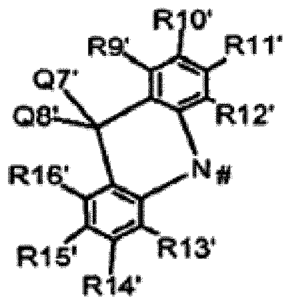

Formula IIIb

where: # marks the point via which the Akr group is bonded to the rest of the molecule, R9 to R16 and R9' to R16' independently of each other are H, ($C_1$-$C_{10}$) alkyl, ($C_1$-$C_{10}$) alkenyl, ($C_1$-$C_{10}$) alkynyl, ($C_3$-$C_7$) cycloalkyl, alkoxy O-R', amine N-R'R", phosphane PR'R", silane SiR'R"R"', borane BR'R", fluorine, chlorine, bromine or aryl, wherein the residues R', R" and R'" signify a linear or branched ($C_1$-$C_{10}$) alkyl, ($C_1$-$C_{10}$) alkene, ($C_1$-$C_{10}$) alkyne, ($C_3$-$C_7$) cycloalkyl or a 5-ring or 6-ring aromatic or heteroaromatic group; Q7, Q8, Q7' and Q8' are defined as for Q1 to Q6 and Q1' to Q6' and can be linked together such that a further ring system is formed;
Acceptor segment: R5 to R8 independently of each other are H, CH3, CN, COR', CO(OR'), CO(NR'R"), SO2R', SO2(OR'), SOR', CF3, CF2R', wherein R' and R" signify linear or branched ($C_1$-$C_{10}$) alkyl, ($C_1$-$C_{10}$) alkene, ($C_1$-$C_{10}$) alkyne, ($C_3$-$C_7$) cycloalkyl or a 5-ring or 6-ring aromatic or heteroaromatic group, and at least one group is not H or $CH_3$,
wherein optionally in Formula IIa at least two substituents selected from R5, R6, R7 and R8 are not H and are not $CH_3$;
wherein optionally two neighbouring groups selected from R5, R6, R7 and R8 are chemically bonded to each other,
wherein the organic molecule comprises or consists of a structure according to Formulae IVa to IVd

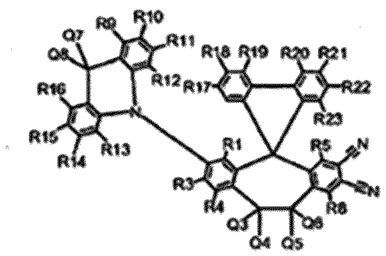

Formula IVa

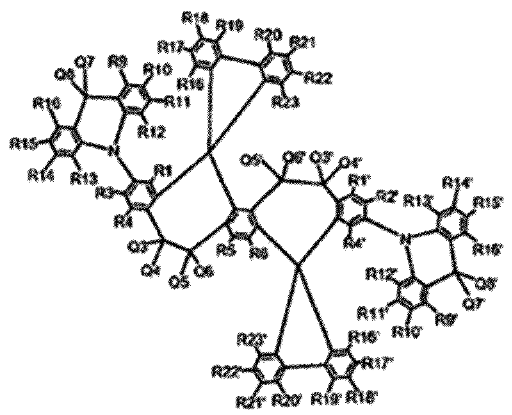

Formula IVb

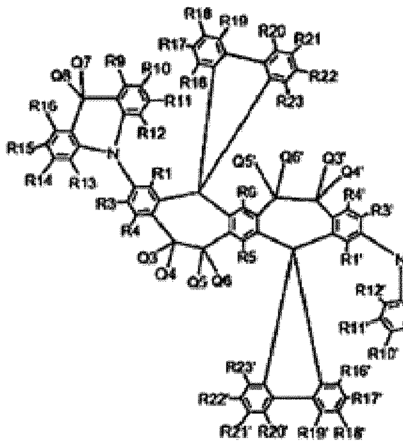

Formula IVc

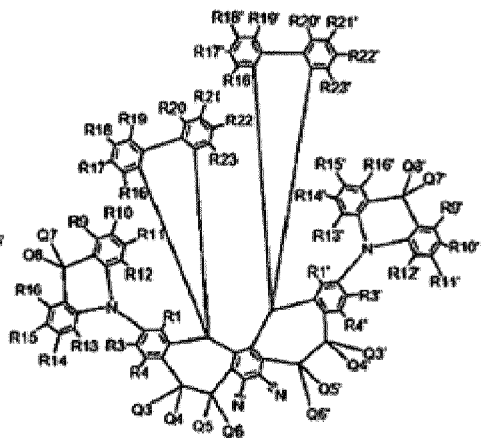

Formula IVd

wherein the substituents R1 to R8, R1' to R8', Q3 to Q6 and Q3' to Q6' are explained under Formulae IIa to lie and the substituents R9 to R16 and Q7 to Q8 are explained under Formulae IIIa and IIIb, wherein R16 to R23 and R16' to R23' are defined as for R9 to R16 and R9' to R16'.

**2.** Optoelectronic device according to claim 1,
wherein the direct rapid filling of the CT singlet state leads to an emission decay time from this CT singlet state that is 5 to 10 times more rapid compared to molecules displaying thermally activated delayed fluorescence (TADF).

**3.** Optoelectronic device according to claim 1 or 2,
wherein the emission decay time of the organic molecule is less than 2 μs, in particular less than 1 μs or less than 500 ns.

**4.** Optoelectronic device according to claim 1 to 3, wherein the emission occurring is not a TADF emission.

**5.** Optoelectronic device according to claim 1 to 4, wherein the $^1$CT fluorescence is a fluorescence from the $^1$CT singlet state equilibrated with the substantially isoenergetic charge transfer triplet ($^3$CT) state.

**6.** Optoelectronic device according to claim 1, wherein the organic molecule comprises or consists of a structure according to formula V

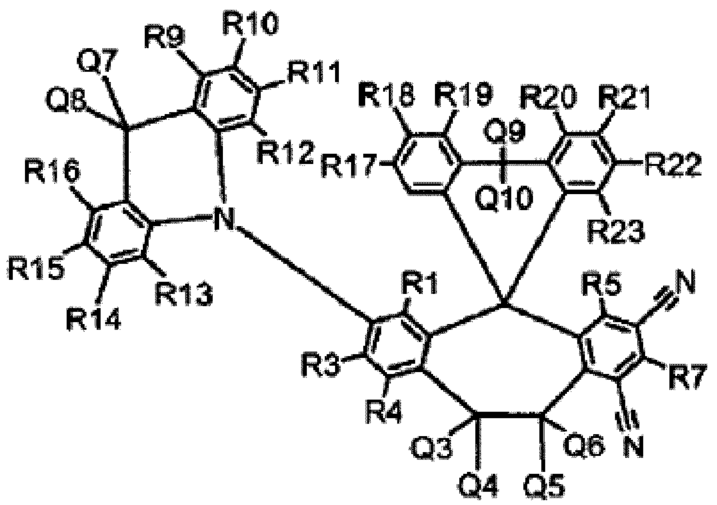

Formula V

wherein the substituents R1 to R23 and Q3 to Q8 are explained under Formulae IIa to IIe, III, IIIb and IVa to IVd and Q9 and Q10 are defined as for Q1 to Q8 and Q1' to Q8' and are optionally linked together such that a further

ring system is formed.

7. Optoelectronic device according to claim 1, wherein the organic molecule comprises or consists of a structure according to formula VI

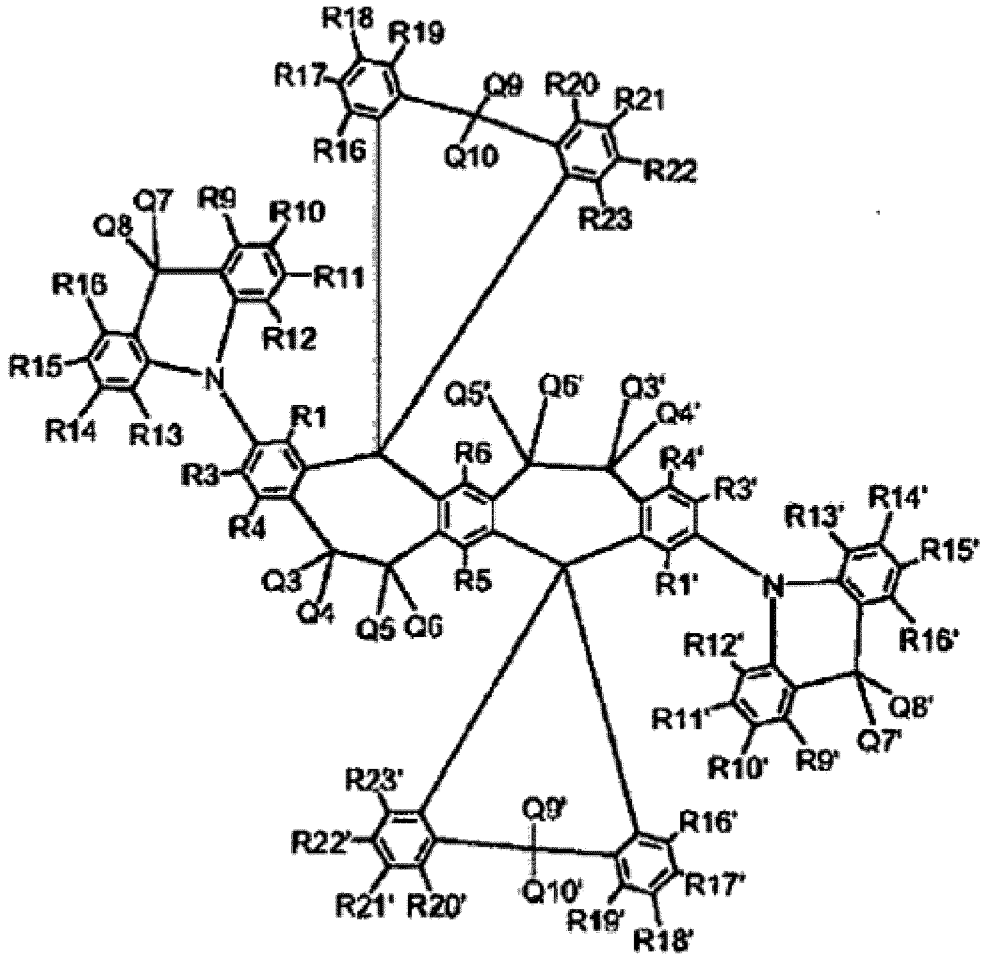

Formula VI

wherein the substituents R1 to R23, R1' to R23', Q3 to Q10 and Q3' to Q8' are explained under Formulae IIa to lie, III, IIIb, IVa to IVd and V and
wherein Q9' and Q10' are defined as for Q1 to Q10 and Q1' to Q8' and are optionally linked together such that a further ring system is formed.

8. Optoelectronic device according to claim 1, wherein the organic molecule comprises or consists of a structure according to Formulae VII to XVI

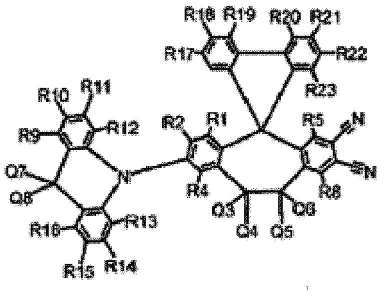

Formula VII

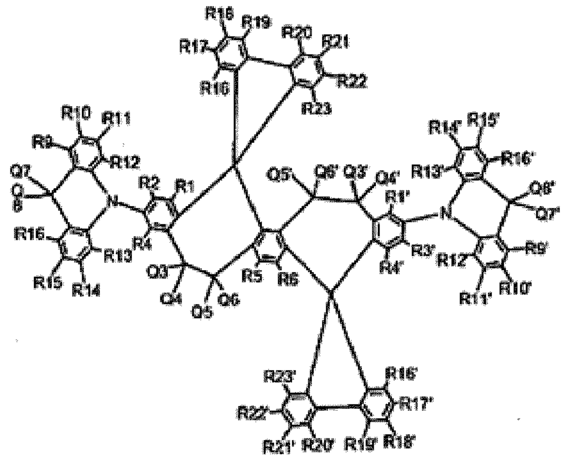

Formula VIII

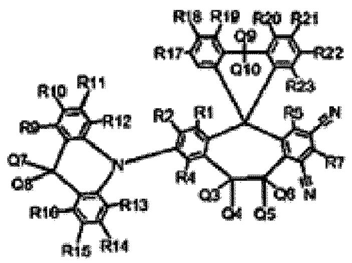

Formula IX

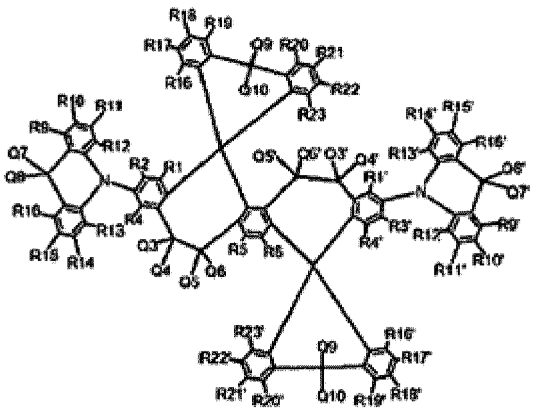

Formula X

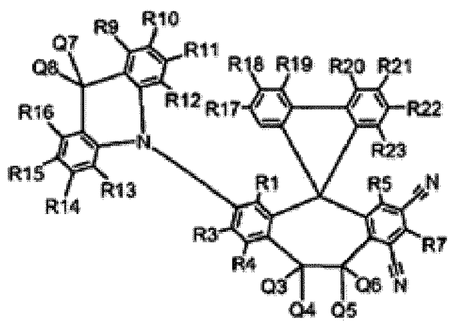

Formula XI

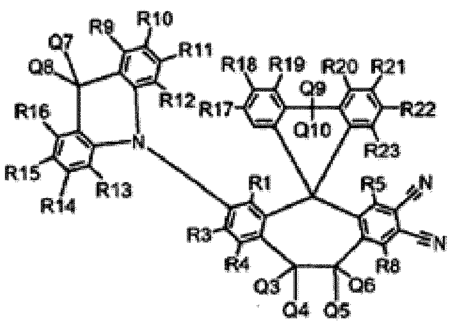

Formula XII

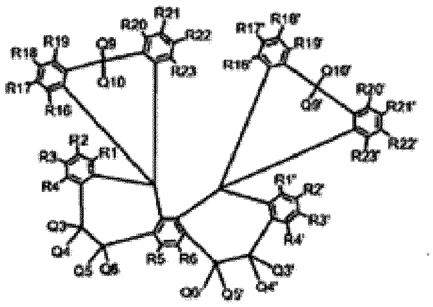

Formula XIII

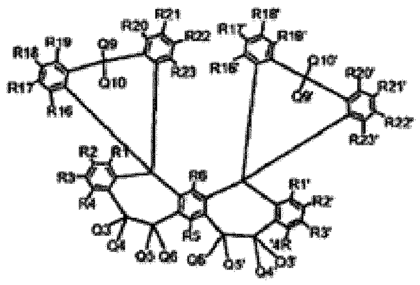

Formula XIV

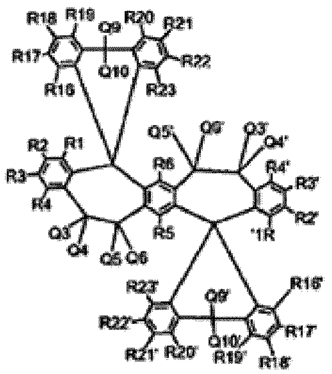

Formula XV

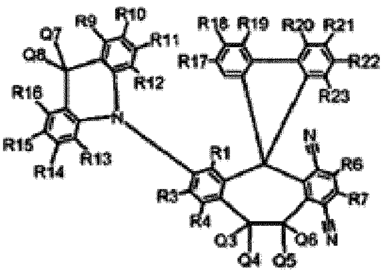

Formula XVI

wherein the substituents are as defined above.

9. Optoelectronic device according to claim 1, wherein in addition the hydrogen atoms in one or more or in all positions of the organic molecule are replaced by deuterium.

10. Organic molecule comprising or consisting of a structure according to a formula selected from the group consisting of Formula Ia, Formula Ib, Formula IIa, Formula IIb, Formula IIc, Formula lid, Formula lie, Formula IIIa, Formula IIIb, Formula IVa, Formula IVb, Formula IVc, Formula IVd, Formula V, Formula VI, Formula VII, Formula VIII, Formula IX, Formula X, Formula XI, Formula XII, Formula XIII, Formula XIV, Formula XV and Formula XVI,
wherein the hydrogen atoms in one or more or in all positions of the organic molecule of the above formulae are replaced by deuterium.

11. Use of an organic molecule according to claim 10 for the emission of light, in particular in an emitter layer of an optoelectronic device.

12. Method for producing an optoelectronic device, wherein an organic molecule according to claim 10 is used.

13. Optoelectronic device according to claim 1 to 9, the organic molecule according to claim 10, the use according to claim 11, the method according to claim 12, wherein the optoelectronic device is selected from the group consisting of organic light-emitting diodes (OLEDs), light-emitting electrochemical cells (LEECs or LECs), OLED sensors, in particular non-hermetically shielded gas and vapour sensors, optical temperature sensors, organic solar cells (OSCs), organic field effect transistors, organic lasers, organic diodes, organic photodiodes and "down conversion" systems.

## Revendications

1. Dispositif optoélectronique, dans lequel ont lieu, après l'excitation d'une molécule organique, des processus directs et rapides de relaxation et de croisement intersystème pour occuper l'état de singulet de transfert de charge ($^1CT$) à partir de l'état de triplet de transfert de charge ($^3CT$) sensiblement iso-énergétique en comparaison avec l'énergie

thermique de $k_BT$ = 210 $cm^{-1}$ présente à température ambiante de sorte que se forme une fluorescence $^1CT \rightarrow S_0$, dans lequel So représente l'état de base électronique, dans lequel la molécule organique présente une structure selon la formule la ou Ib ou est constituée d'une structure selon la formule la ou Ib

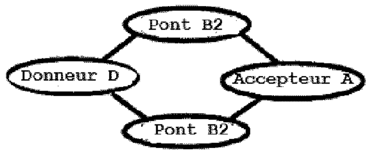


Formule Ia

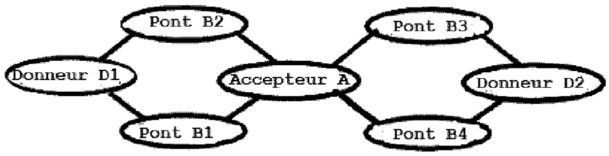


Formule Ib

avec un segment donneur D, D1, D2 aromatique ou hétéroaromatique et un segment accepteur A aromatique ou hétéroaromatique lié par l'intermédiaire de deux ou de quatre ponts B1, B2, B3 et B4 non conjugués,
dans lequel les parties de molécules aromatiques ou hétéroaromatiques (donneur ou accepteur) sont substituées par des substituants donneurs ou accepteurs d'électrons, dans lequel les ponts B1, B2, B3, B4 sont choisis de telle manière qu'ils empêchent des chevauchements marqués de HOMO donneur avec le LUMO accepteur,
dans lequel la molécule organique présente une structure selon l'une des formules illustrées ci-après ou est constituée d'une structure de ce type

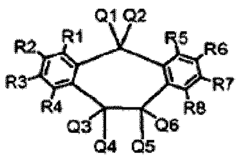

Formule IIa

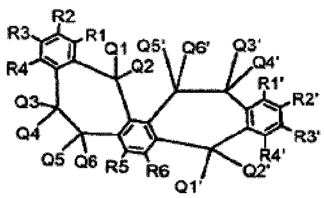

Formule IIb

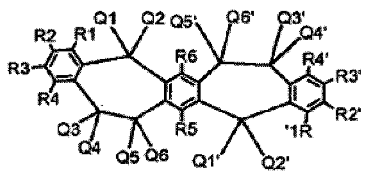

Formule IIc

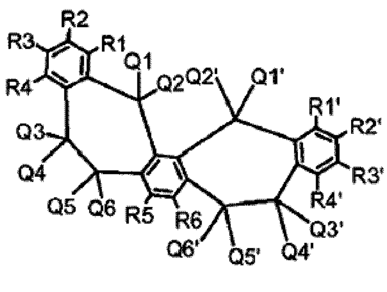

Formule IId

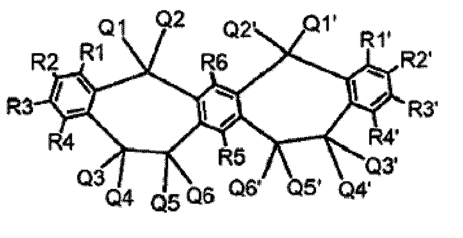

Formule IIe

,

dans lequel la structure de base 2,3:6,7-dibenzosubérane est substituée de telle manière que les propriétés électroniques des systèmes cycliques aromatiques sont modifiées de telle manière que la partie de molécule substituées par R1 à R4 devient la partie de donneur D ou les parties de molécule substituées par R1 à R4 et R1' à R4' deviennent des parties de donneur D1 et D2 au sens des formules la et Ib et la partie de molécule substituée par R5 à R8 devient la partie d'accepteur A, dans lequel les groupes méthylène et éthylène substitués par Q1 à Q6 du 2,3:6,7-dibenzosubérane représentent les ponts B1 ou B2 de la formule la et les groupes méthylène et éthylène substitués par Q1 à Q6 ainsi que par Q1' à Q6' du 2,3:6,7-dibenzosubérane représentent les ponts B1 ou B2 et B3 ou B4 des formules Ib, avec des ponts :

Q1, Q2, Q1' et Q2' sont choisis indépendamment les uns des autres parmi le groupe constitué de alkyle, alcényle, alcynyle, cycloalkyle et aryle ;
Q3 à Q6 et Q3' à Q6' sont choisis indépendamment les uns des autres parmi le groupe constitué de H, alkyle, alcényle, Alcynyle, cycloalkyle et aryle ; ce faisant :

l'alkyle est un alkyle en $C_1$-$C_{10}$ linéaire (non ramifié) ou ramifié, qui présente 1 à 10 atomes de carbone

dans la chaîne hydrocarbonée principale,
l'alcényle est un alcényle en $C_1$-$C_{10}$ linéaire ou ramifié, qui présente 1 à 10 atomes de carbone dans la chaîne hydrocarbonée principale,
l'alcynyle est un alcynyle en $C_1$-$C_{10}$ linéaire ou ramifié, qui présente 1 à 10 atomes de carbone dans la chaîne hydrocarbonée principale,
le cycloalkyle est un cycloalkyle en $C_3$-$C_7$, qui présente 3 à 7 atomes de carbone cycliques, et l'aryle est un groupe aromatique ou hétéroaromatique à 5 noyaux ou à 6 noyaux,
dans lequel on entend ici par « chaîne hydrocarbonée principale » la chaîne la plus longue de l'alkyle, de l'alcényle ou de l'alcynyle ramifié ou non linéaire ; dans lequel chaque groupe Q1 à Q6 et Q1' et Q6' peut indépendamment les uns des autres ne pas être substitué ou être substitué par un ou plusieurs F, Cl, Br, alcoxyle, thioalcoxyle, amine, silane, phosphane, borane ou aryle ;
les groupes Q1 et Q2, les groupes Q3 et Q4, les groupes Q5 et Q6, les groupes Q1' et Q2', les groupes Q3' et Q4' ainsi que les groupes Q5' et Q6' sont combinés les uns aux autres chimiquement en option de sorte qu'il se forme d'autres systèmes cycliques ;

partie de donateur :
R1 à R4 et R1' à R4' sont choisis indépendamment les uns des autres parmi le groupe constitué de H, alkyle, alcényle, alcynyle, cycloalkyle, alcoxyle, thioalcoxyle, amine, phosphane, silane, borane, fluor, chlore, brome et le groupe Akr défini ci-après à l'aide de la formule III, dans lequel au moins une position de R1 à R4 est dans la formule IIa Akr et au moins une position de R1 à R4 est Akr et au moins une position de R1' à R4' est Akr dans les formules IIb à IIe, ce faisant :

l'alkyle est un alkyle en $C_1$-$C_{10}$ linéaire ou ramifié, qui présente 1 à 10 atomes de carbone dans la chaîne hydrocarbonée principale,
l'alcényle est un alcényle en $C_1$-$C_{10}$ linéaire ou ramifié, qui présente 1 à 10 atomes de carbone dans la chaîne hydrocarbonée principale,
l'alcynyle est un alcynyle en $C_1$-$C_{10}$ linéaire ou ramifié, qui présente 1 à 10 atomes de carbone dans la chaîne hydrocarbonée principale,
le cycloalkyle est un cycloalkyle en $C_3$-$C_7$, qui présente des atomes de carbone à 3 à 7 noyaux, et l'aryle est un groupe aromatique ou hétéroaromatique à 5 noyaux ou à 6 noyaux,
dans lequel les substitutions alcoxyle, thioalcoxyle, amine, phosphane, silane et borane sont respectivement alcoxyle O-R', thioalcoxyle S-R', amine N-R'R'', phosphane P-R'-R'', silane SiR'R''R''' et borane BR'R'', dans lequel R', R'' et R''' signifient indépendamment les uns des autres un alkyle en $C_1$-$C_{10}$ linéaire ou ramifié, un alcène en $C_1$-$C_{10}$, un alcyne en $C_1$-$C_{10}$, un cycloalkyle en $C_3$-$C_7$ ou un groupe aromatique ou hétéroaromatique à 5 noyaux ou à 6 noyaux ;
dans lequel le groupe Akr présente une structure de la formule IIIa et IIIb ou en est constitué :

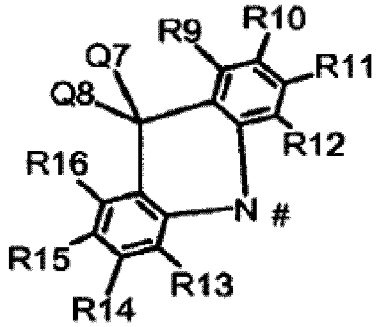

Formule IIIa

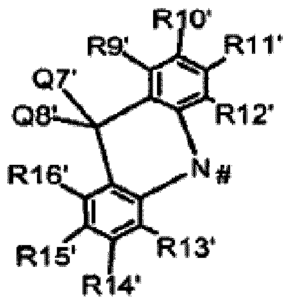

Formule IIIb

dans lesquelles : si # marque l'emplacement, par l'intermédiaire duquel le groupe Akr est relié au reste de la molécule, R9 à R16 et R9' à R16' sont indépendamment les uns des autres H, alkyle en $C_1$-$C_{10}$, alcényle en $C_1$-$C_{10}$, alcynyle en $C_1$-$C_{10}$, cycloalkyle en $C_3$-$C_7$, alcoxyle O-R', amine N-R'R'', phosphane PR'R'', silane SiR'R''R''', borane BR'R'', fluor, chlore, brome ou aryle, dans lequel les radicaux R', R'' et R''' signifient un alkyle en $C_1$-$C_{10}$ linéaire ou ramifié, alcène en $C_1$-$C_{10}$, alcyne en $C_1$-$C_{10}$, cycloalkyle en $C_3$-$C_7$ ou un groupe aromatique ou hétéroaromatique à 5 noyaux ou à 6 noyaux ;

Q7, Q8, Q7' et Q8' sont définis comme Q1 à Q6 et Q1' à Q6' et peuvent être combinés les uns aux autres de sorte qu'il se forme un autre système cyclique ;

partie d'accepteur : R5 à R8 sont indépendamment les uns des autres, H, CH3, CN, COR', COR(OR'), CO(NR'R"), SO2R', SO2(OR'), SOR', CF3, CF2R', dans lequel R' et R" signifient un alkyle en $C_1$-$C_{10}$ linéaire ou ramifié, alcène en $C_1$-$C_{10}$, alcyne en $C_1$-$C_{10}$, cycloalkyle en $C_3$-$C_7$ ou un groupe aromatique ou hétéroaromatique à 5 noyaux ou à 6 noyaux et au moins un groupe n'est pas H ou $CH_3$,

dans lequel en option au moins deux substituants choisis parmi R5, R6, R7 et R8 ne sont pas H ou $CH_3$ dans la formule IIa ;

dans lequel en option deux groupes adjacents choisis parmi R5, R6, R7 et R8 sont reliés l'un à l'autre chimiquement,

dans lequel la molécule organique présente une structure selon les formules IVa à IVd ou en est constituée

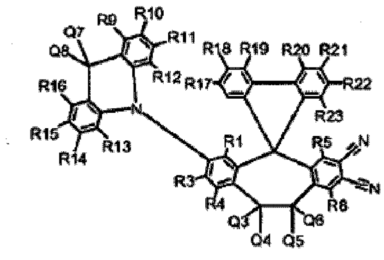

Formule IVa

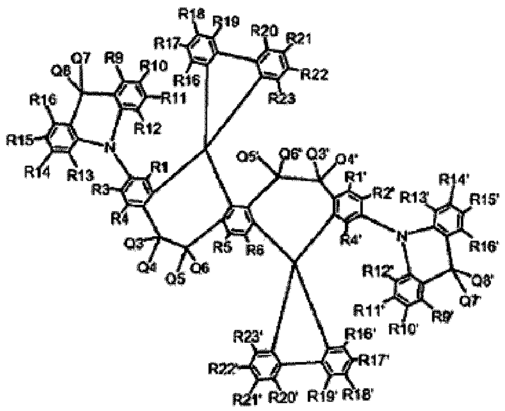

Formule IVb

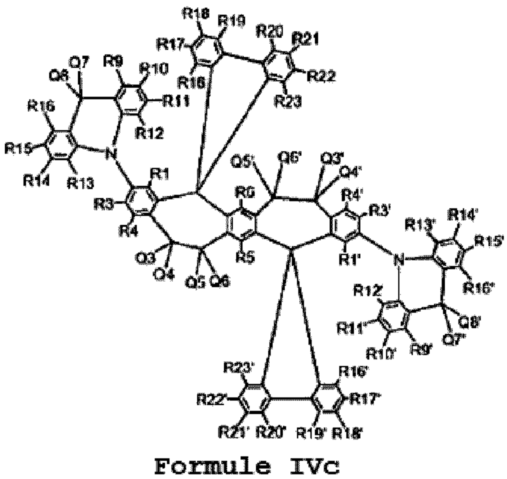

Formule IVc

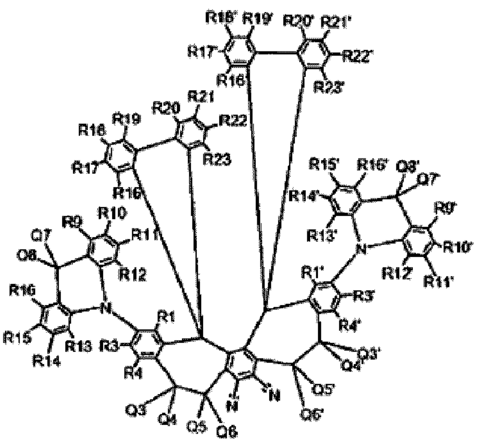

Formule IVd

dans lequel les substituants R1 à R8, R' à R8', Q3 à Q6 et Q3' à Q6' sont expliqués aux formules IIa à IIe et les substituants R9 à R16 et Q7 à Q8 sont expliqués aux formules IIIA et IIIb, dans lequel R16 à R23 et R16' à R23' ainsi que R9 à R16 et R9' à R16' sont définis.

**2.** Dispositif optoélectronique selon la revendication 1,
dans lequel l'occupation rapide directe de l'état de singulet CT a, en comparaison avec des molécules qui affichent une fluorescence décalée activée thermiquement (TADF), pour effet que le temps d'extinction d'émission issu dudit état de singulet CT a lieu 5 à 10 fois plus rapidement.

**3.** Dispositif optoélectronique selon la revendication 1 ou 2,
dans lequel le temps d'extinction d'émission de la molécule organique est inférieur à 2 µs, en particulier est inférieur à 1 µs ou inférieur à 500 ns.

4. Dispositif optoélectronique selon la revendication 1 à 3, dans lequel l'émission survenant ne constitue aucune émission TADF.

5. Dispositif optoélectronique selon la revendication 1 à 4, dans lequel la fluorescence $^1$CT est une fluorescence équilibrée avec l'état ($^3$CT) de triplet de transfert de charge sensiblement iso-énergétique à partir de l'état de singulet $^1$CT.

6. Dispositif optoélectronique selon la revendication 1, dans lequel la molécule organique présente une structure selon la formule V ou en est constituée

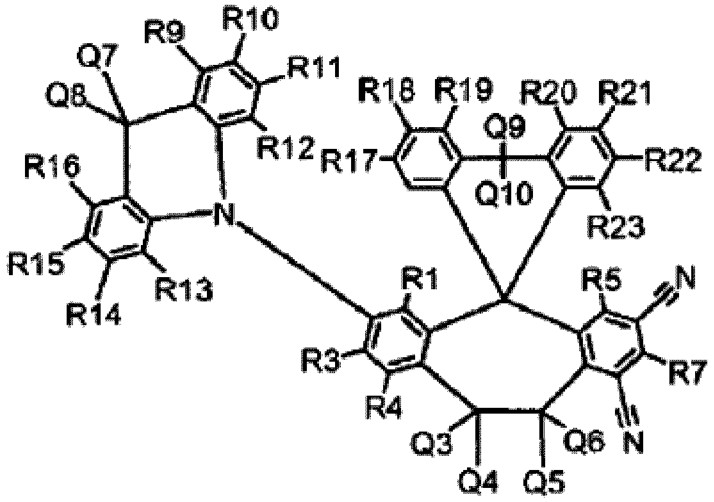

Formule V

dans lequel les substituants R1 à R23 et Q3 à Q8 sont expliqués aux formules IIa à IIe, III, IIIb et IVa à IVd, et Q9 et Q10 ainsi que Q1 à Q8 et Q1' à Q8' sont définis et sont combinés en option les uns aux autres de sorte qu'il se forme un autre système cyclique.

7. Dispositif optoélectronique selon la revendication 1, dans lequel la molécule organique présente une structure selon la formule VI ou en est constituée

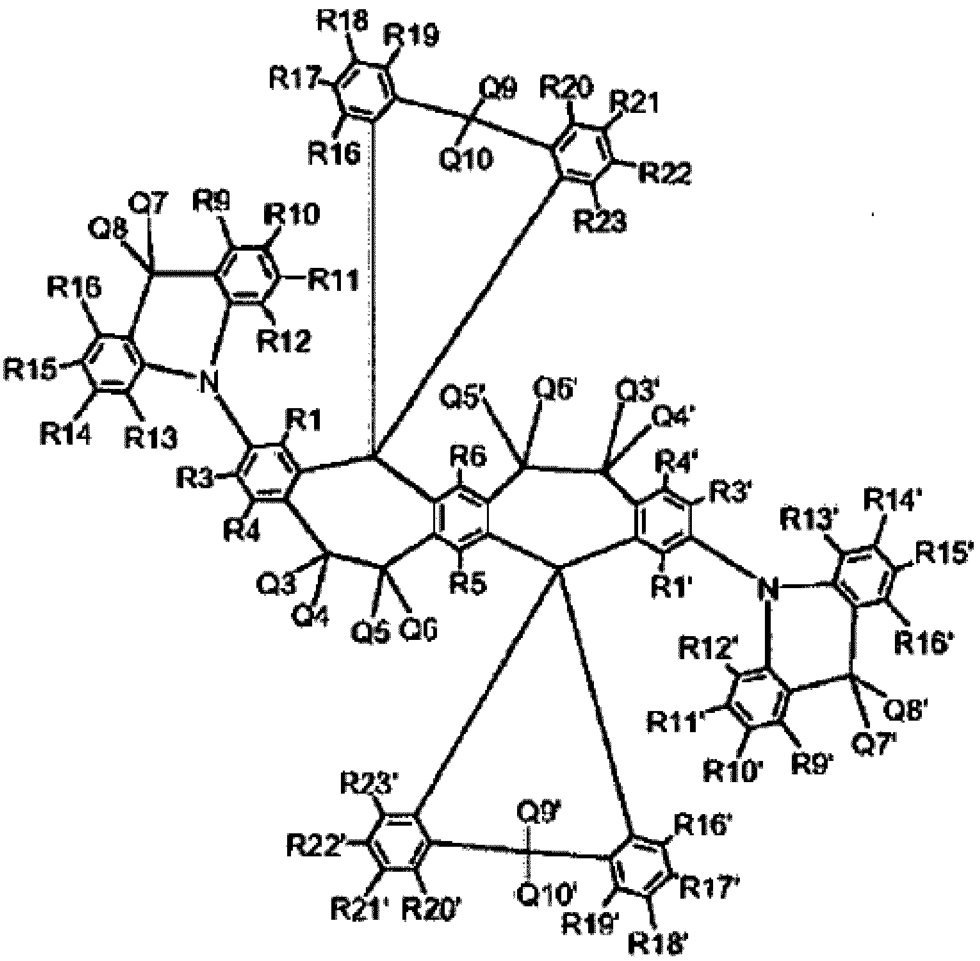

Formule VI

dans lequel les substituants R1 à R23, R1' à R23', Q3 à Q10 et Q3' à Q8' sont expliqués aux formules IIa à IIe, III, IIIb, IVa à IVd et V, et
dans lequel Q9' et Q10' ainsi que Q1 à Q10 et Q1' à Q8' sont définis et sont combinés en option les uns aux autres de sorte qu'il se forme un autre système cyclique.

**8.** Dispositif optoélectronique selon la revendication 1, dans lequel la molécule organique présente une structure selon les formules VII à XVI ou en est constituée

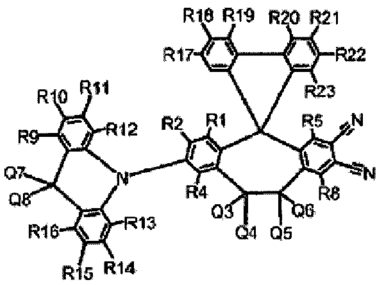

Formule VII

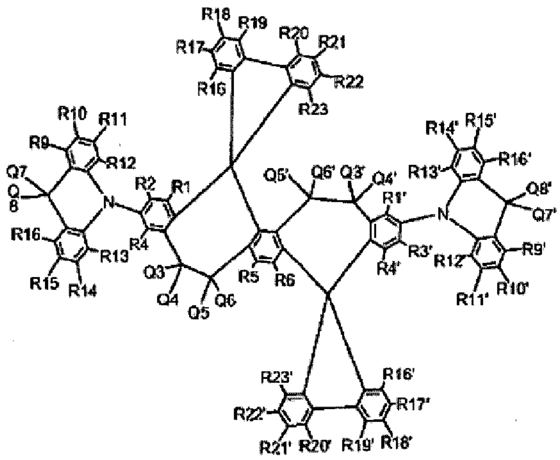

Formule VIII

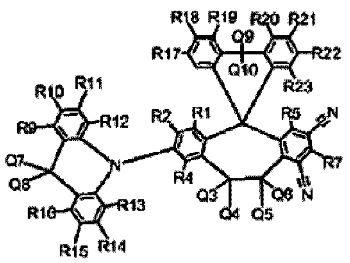

Formule IX

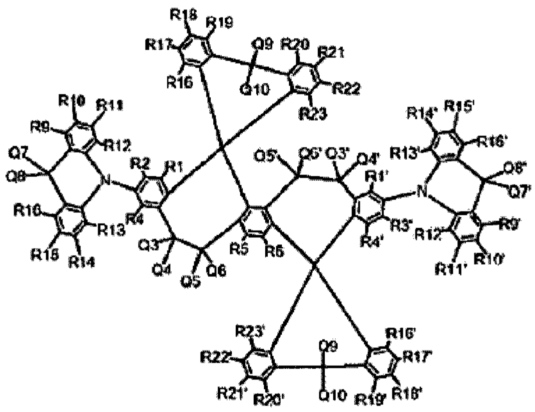

Formule X

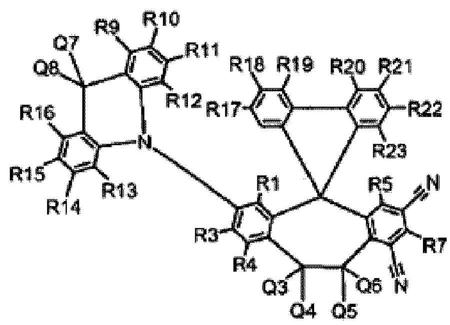

Formule XI

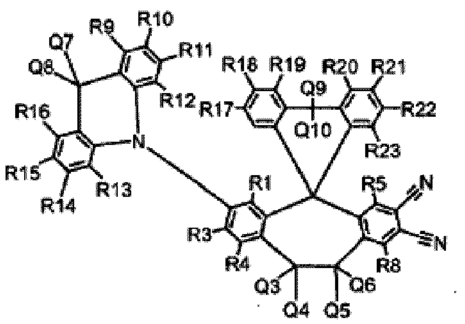

Formule XII

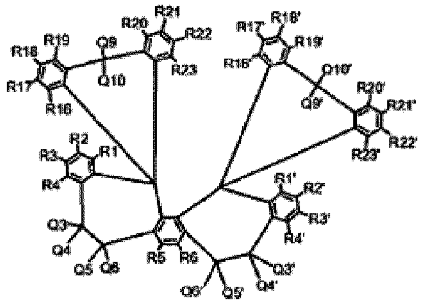

Formule XIII

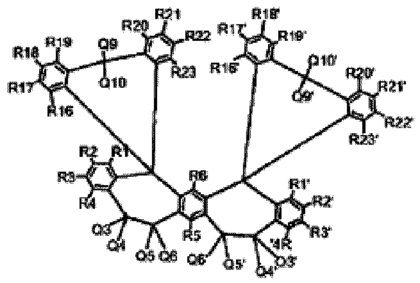

Formule XIV

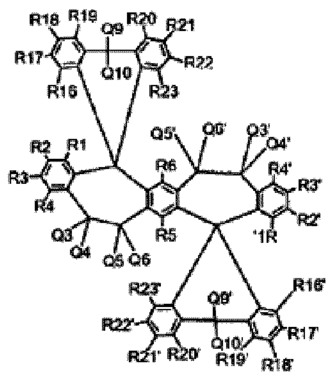

Formule XV

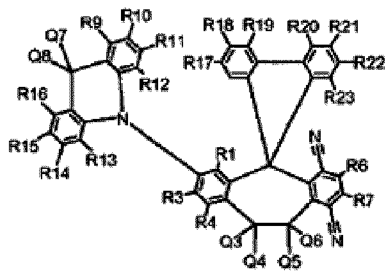

Formule XVI

dans lequel les substituants sont définis tels que ci-dessus.

**9.** Dispositif optoélectronique selon la revendication 1, dans lequel en supplément les atomes d'hydrogène sont remplacés par du deutérium sur une, plusieurs ou toutes les positions de la molécule organique.

**10.** Molécule organique, présentant une structure ou constituée d'une structure selon une formule, qui est choisie parmi le groupe constitué de la formule IA, formule Ib, formule IIa, formule IIb, formule IIc, formule IId, formule IIe, formule IIIa, formule IIIb, formule IVa, formule IVb, formule IVc, formule IVd, formule V, formule VI, formule VII, formule VIII, formule IX, formule X, formule XI, formule XII, formule XIII, formule XIV, formule XV et formule XVI,
dans laquelle les atomes d'hydrogène sont remplacés par du deutérium à une, plusieurs ou toutes les positions de la molécule organique des formules susmentionnées.

**11.** Utilisation d'une molécule organique selon la revendication 10 pour l'émission de lumière, en particulier dans une couche émettrice d'un dispositif optoélectronique.

**12.** Procédé de fabrication d'un dispositif optoélectronique, dans lequel une molécule organique selon la revendication 10 est utilisée.

**13.** Dispositif optoélectronique selon la revendication 1 à 9, molécule organique selon la revendication 10, utilisation selon la revendication 11, procédé selon la revendication 12,
dans lesquels le dispositif optoélectronique est choisi parmi le groupe constitué de diodes organiques électroluminescentes (OLED), des cellules électrochimiques d'émission de lumière (LEEC ou LEC), des capteurs à OLED, en particulier des capteurs de gaz et de vapeur protégés de l'extérieur en particulier de manière non hermétique, des capteurs de température optiques, des cellules solaires organiques (OSC), des transistors à effet de champ organiques, des lasers organiques, des diodes organiques, des photodiodes organiques et de systèmes convertisseurs-abaisseurs dits de « down conversion ».

Figur 1

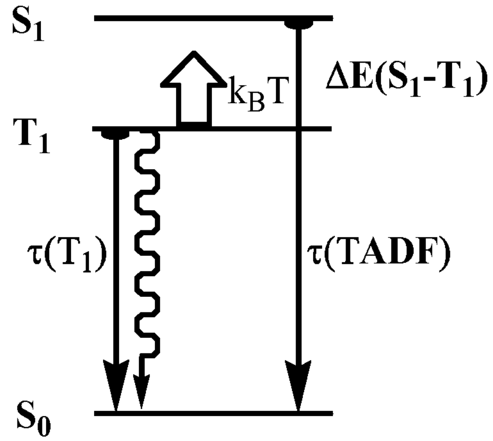


Figur 2

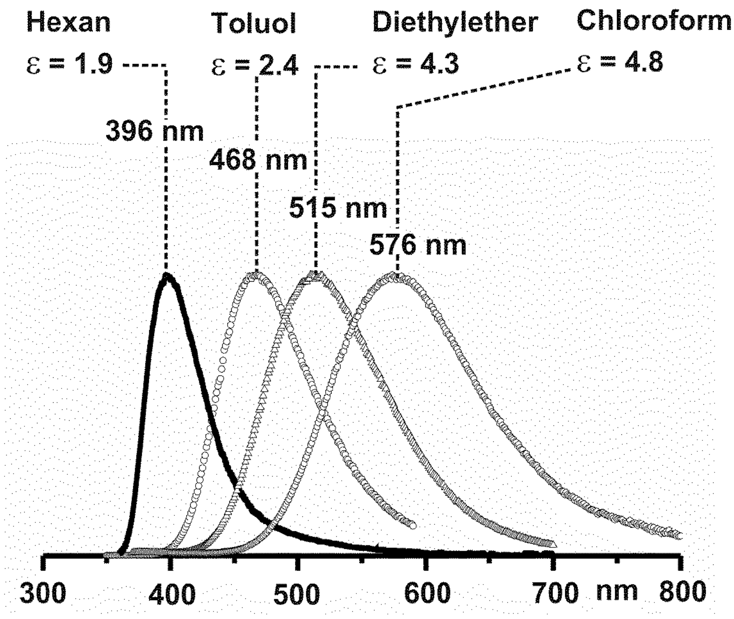


Figur 3

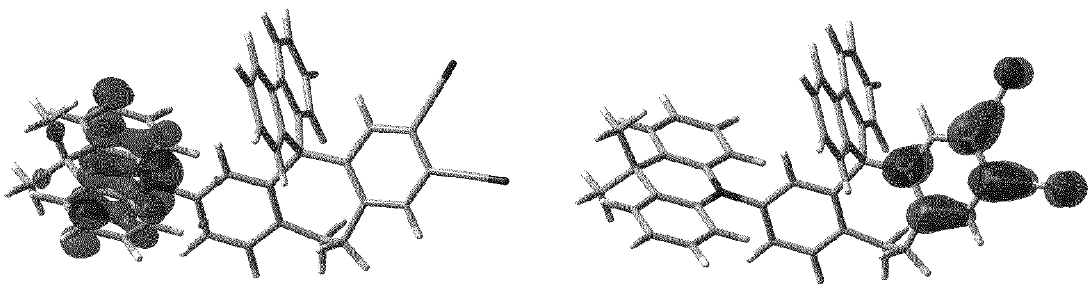

HOMO LUMO

Figur 4

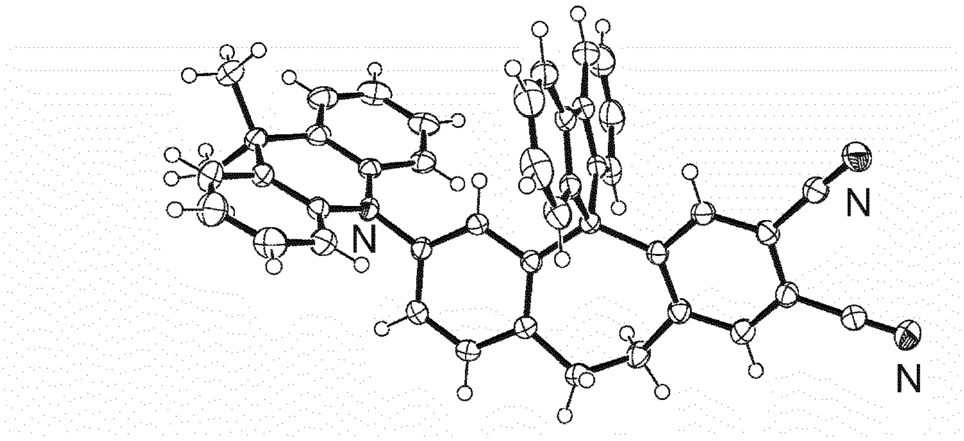

Figur 5

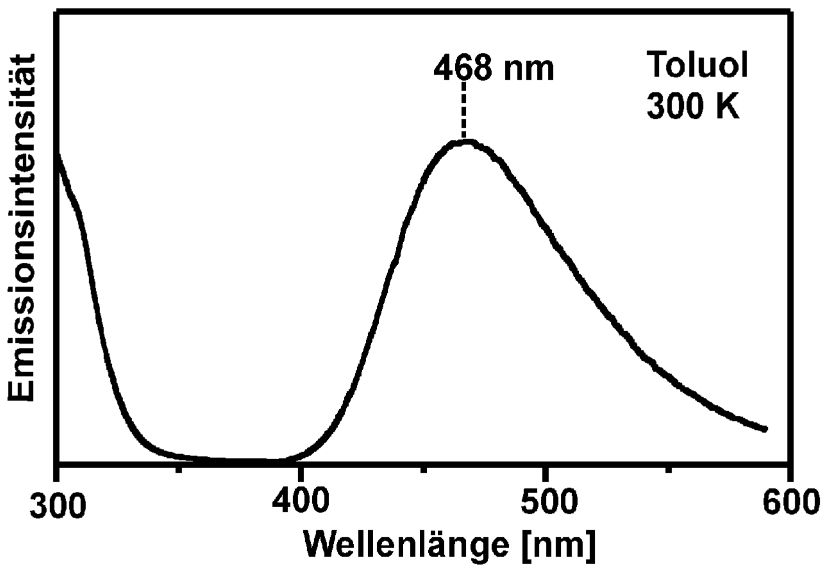

Figur 6

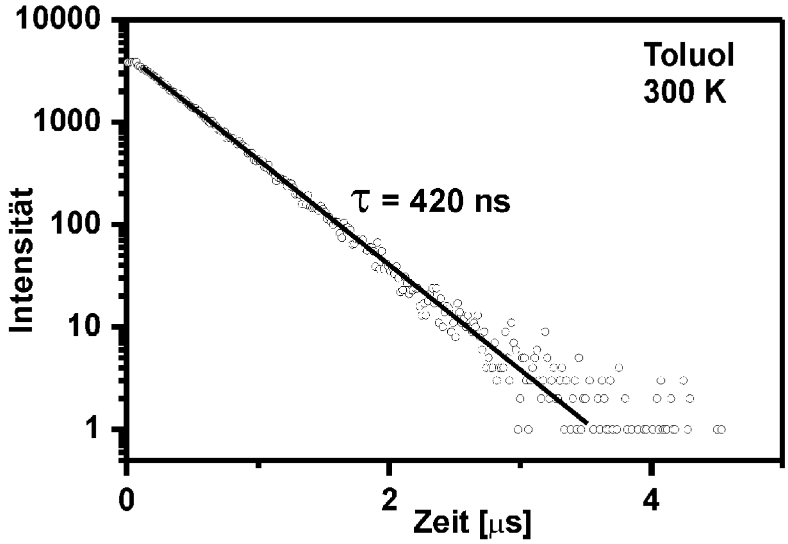


Figur 7

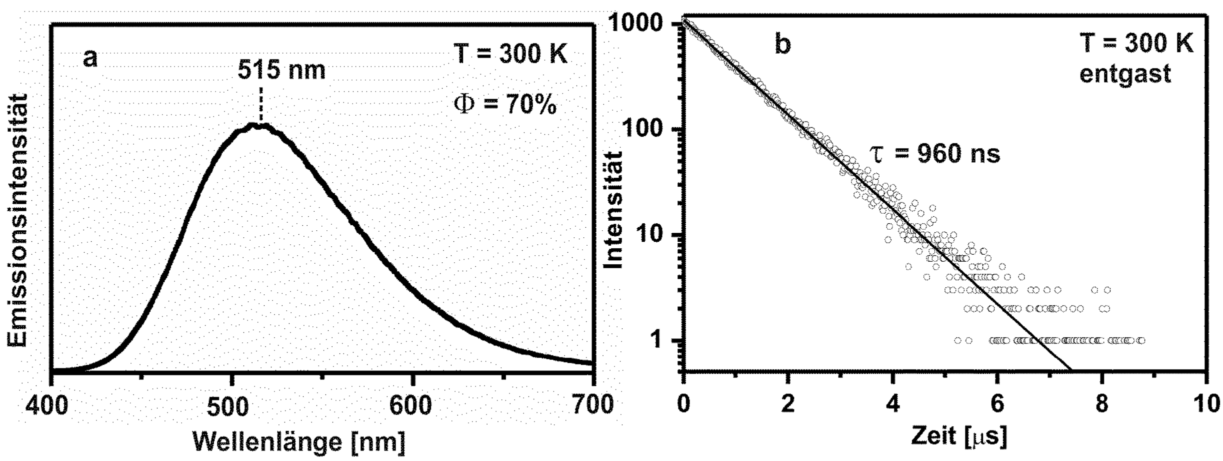

Figur 8

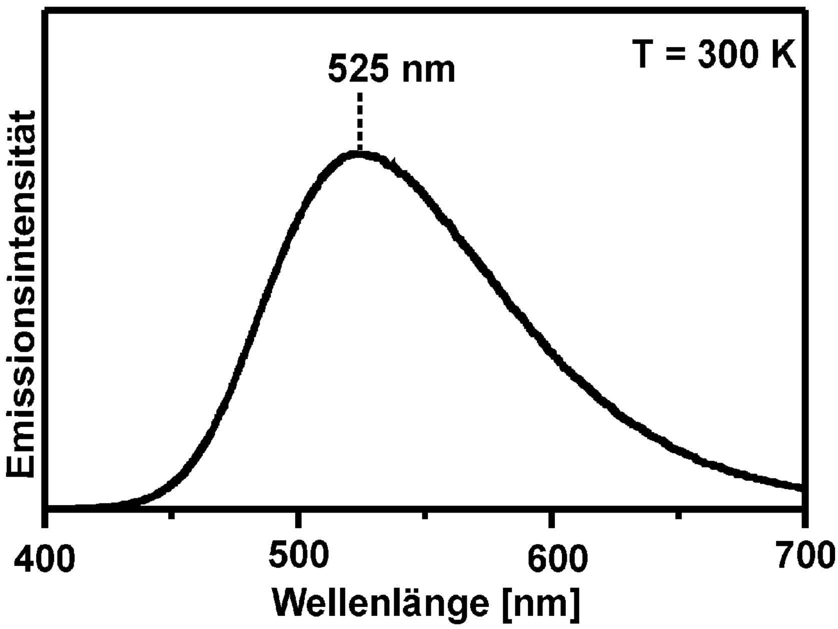


Figur 9

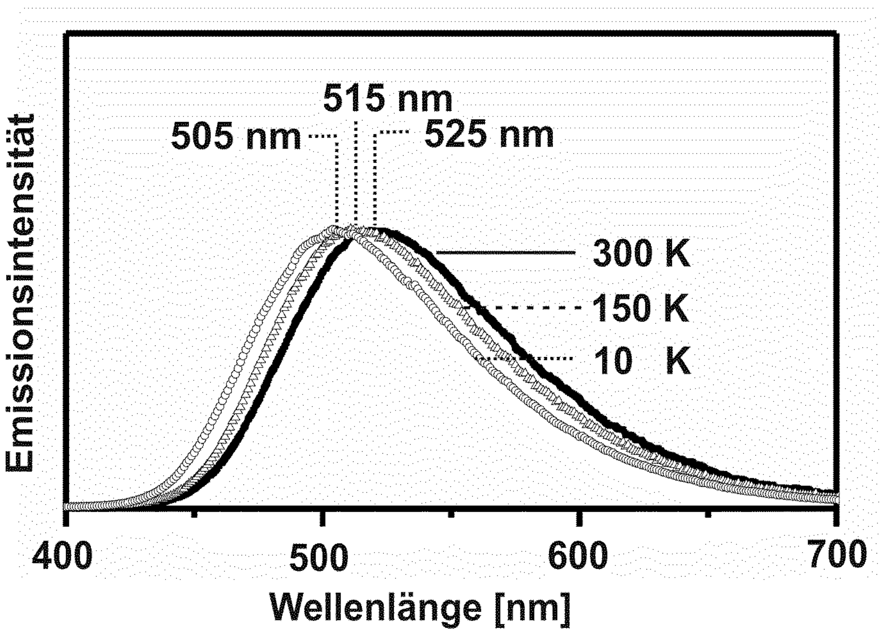

Figur 10

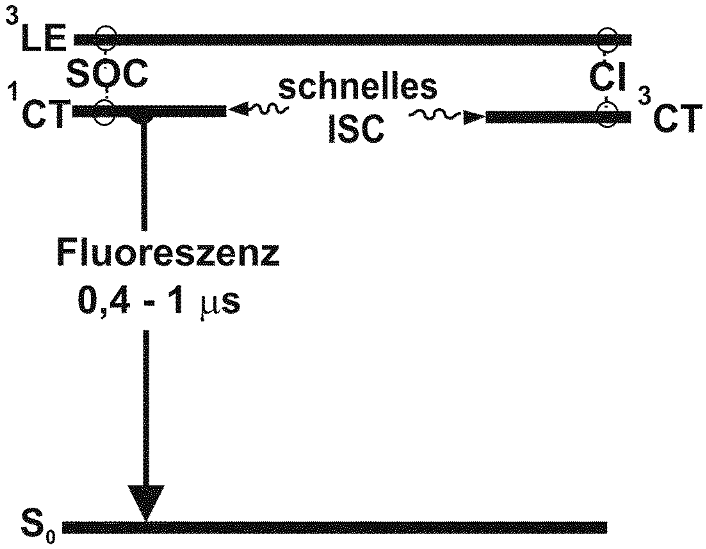


Figur 11

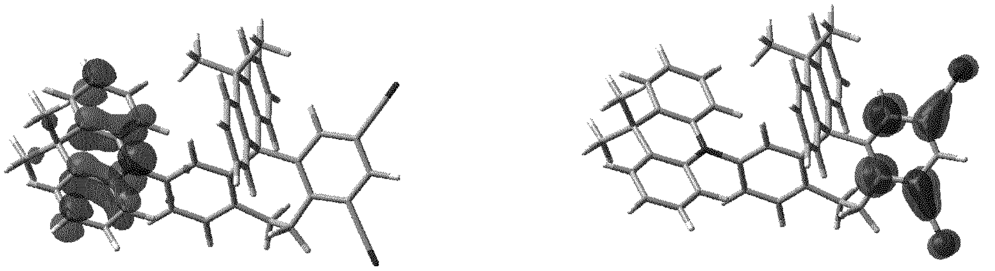

HOMO LUMO

Figur 12

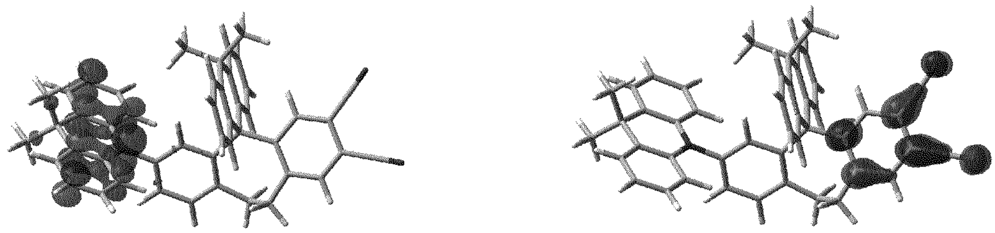

HOMO LUMO

Figur 13

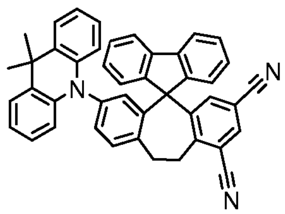

**7**

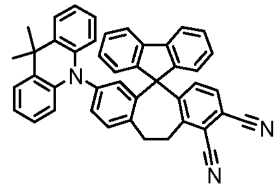

**8**

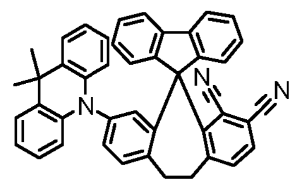

**9**

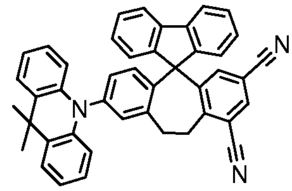

**10**

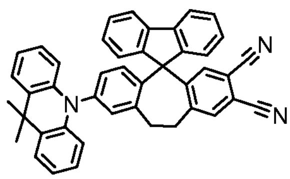

**11**

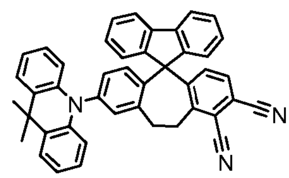

**12**

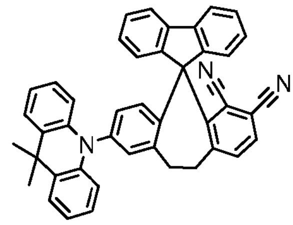

**13**

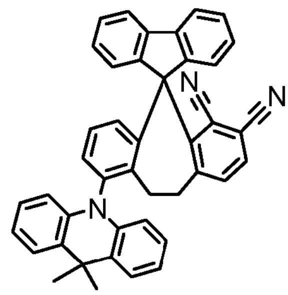

**14**

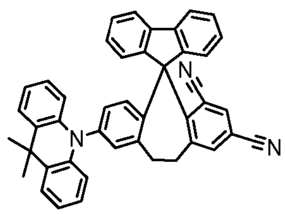

**15**

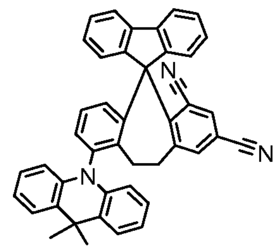

**16**

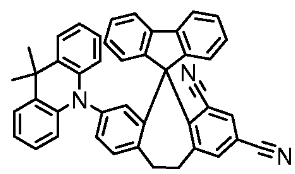

**17**

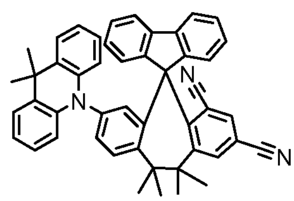

**18**

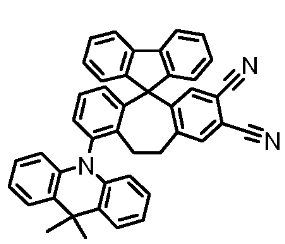

**19**

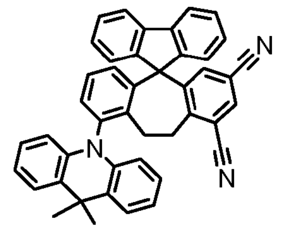

**20**

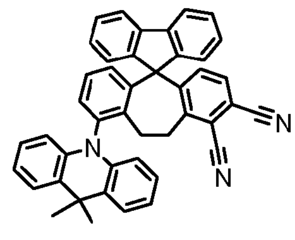

**21**

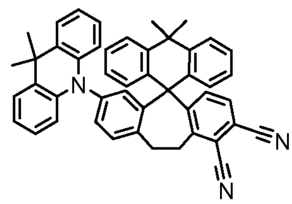

**22**

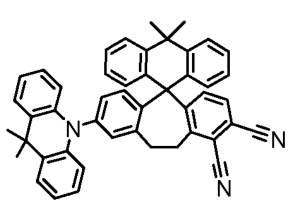

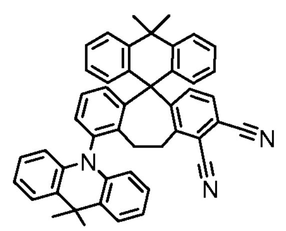

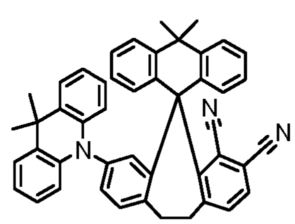

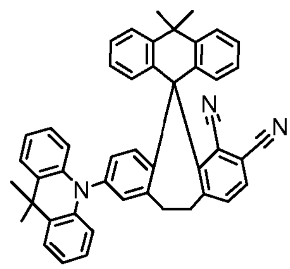

23 24 25 26

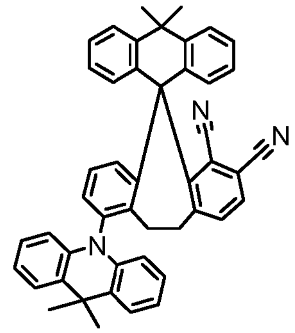
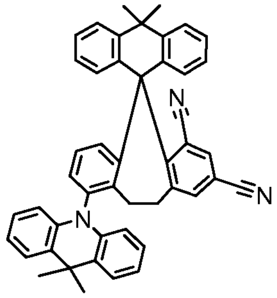
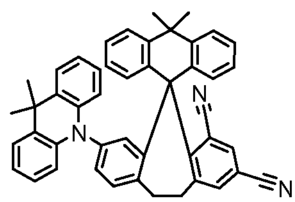
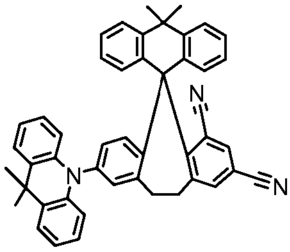

27 28 29 30

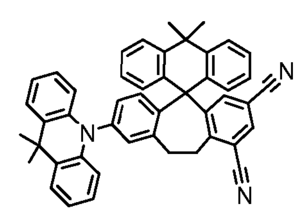
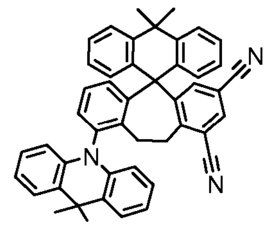
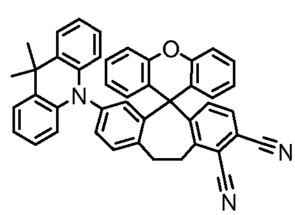
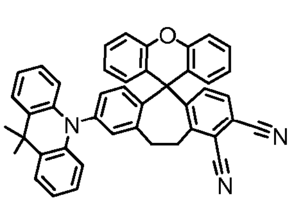

31 32 33 34

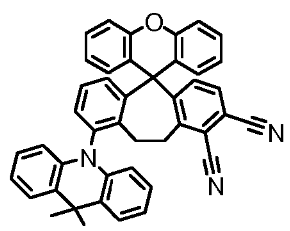
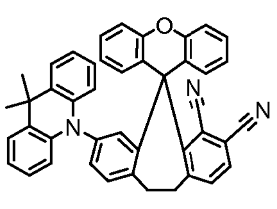
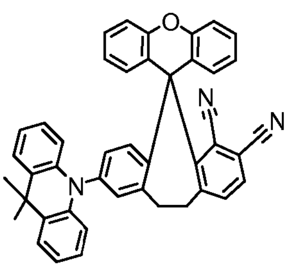
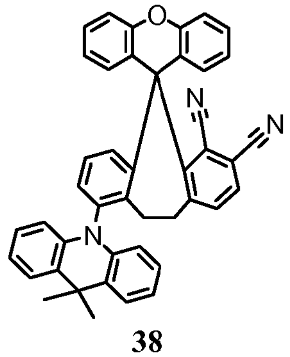

35 36 37 38

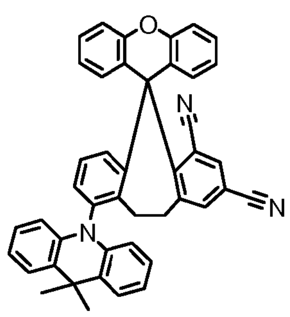
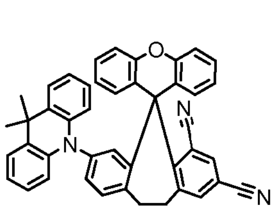
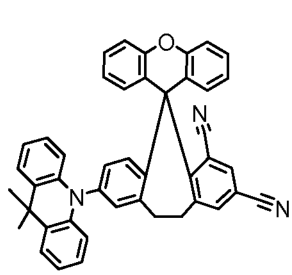
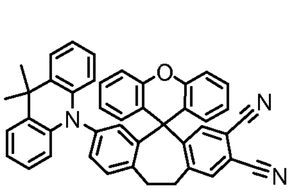

39 40 41 42

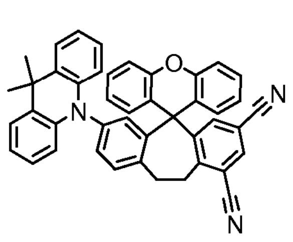

43

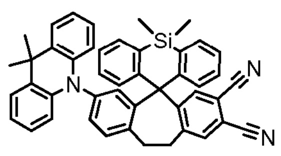

44

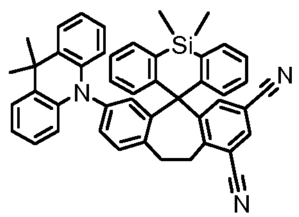

45

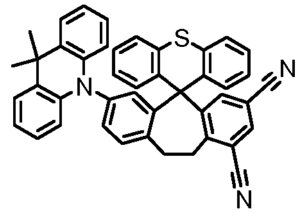

46

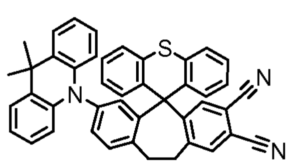

47

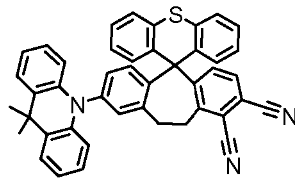

48

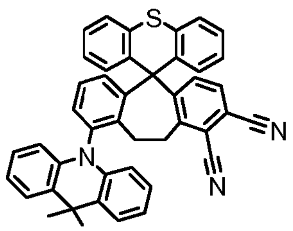

49

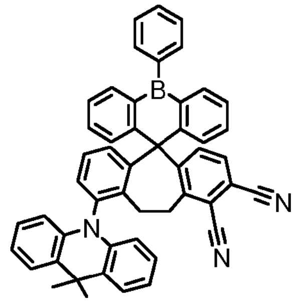

50

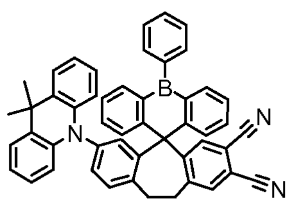

51

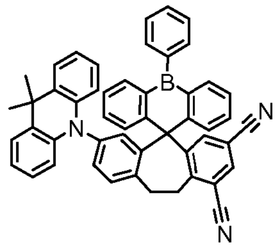

52

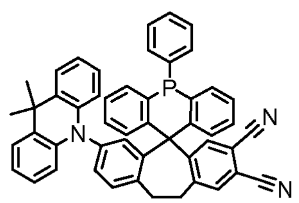

53

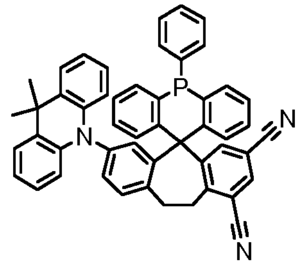

54

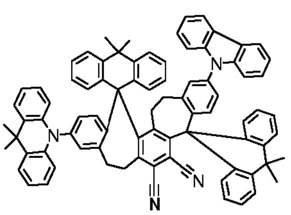

55

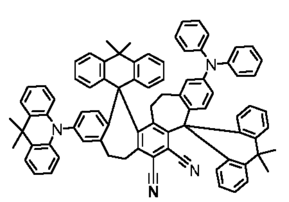

56

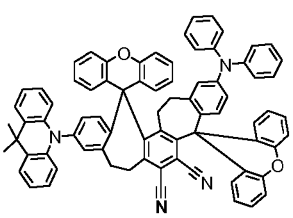

57

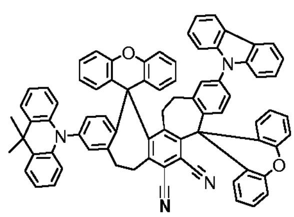

58

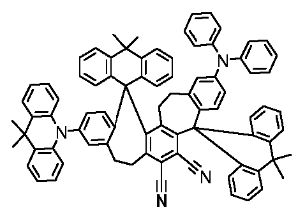

**59**

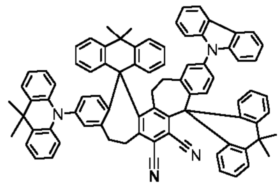

**60**

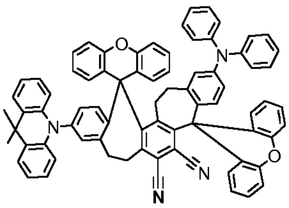

**61**

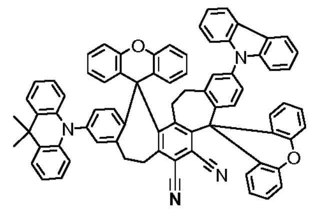

**62**

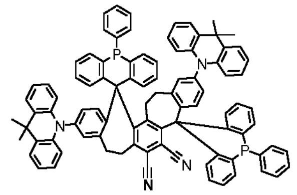

**63**

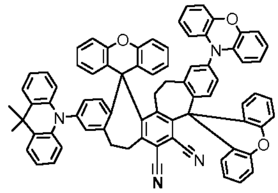

**64**

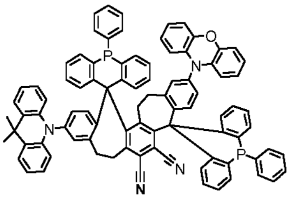

**65**

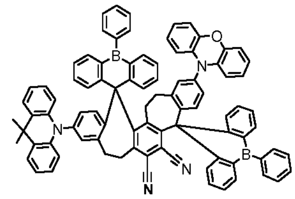

**66**

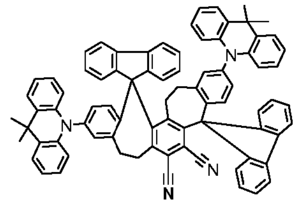

**66**

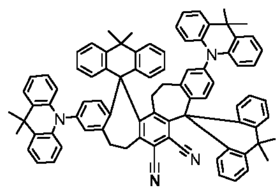

**67**

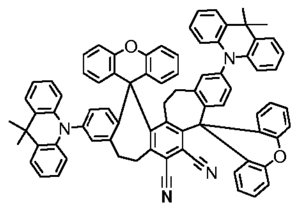

**68**

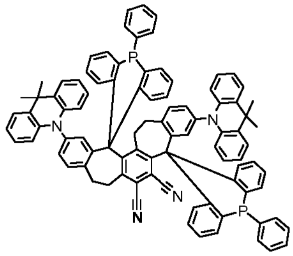

**69**

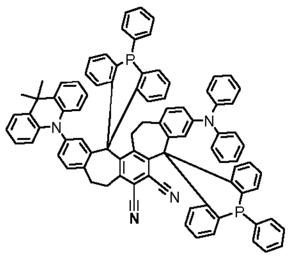

**70**

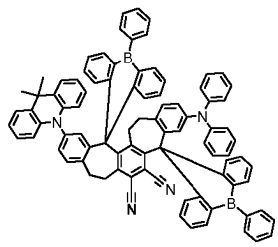

**71**

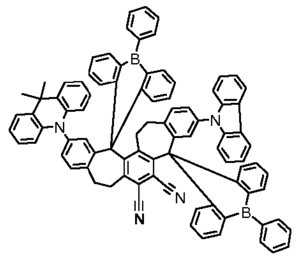

**72**

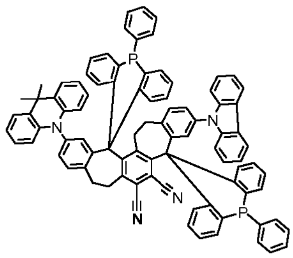

**73**

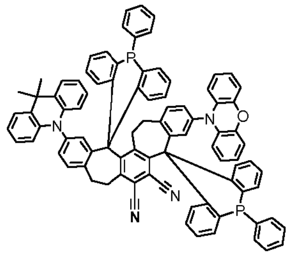

**74**

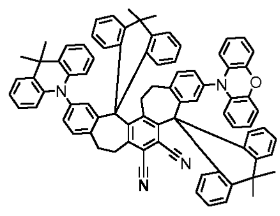

**75**

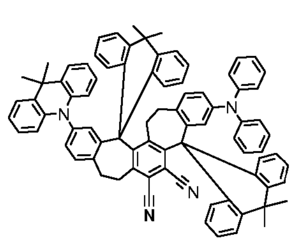

**76**

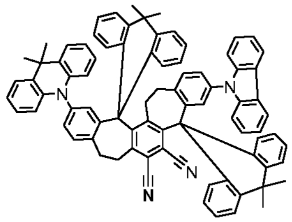

**77**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2017017205 A1
- JP 2010024149 A

### In der Beschreibung aufgeführte Nicht-Patentliteratur

- **B. C. A. PARKER ; C. G. HATCHARD.** Trans. Faraday. Royal Society of Chem, 1961, vol. 57, 1894
- **R. CZERWIENIEC et al.** *Coord. Chem. Rev.,* 2016, vol. 325, 2-26
- **D. I. LYAKH ; M. MUSIAZ ; V. F. LOTRICH ; R. J. BARTLETT.** *Chem. Rev.,* 2012, vol. 112, 182-243
- **P. G. SZALAY ; T. MULLER ; G. GIDOFALVI ; H. LISCHKA ; R. SHEPARD.** *Chem. Rev.,* 2012, vol. 112, 108-181
- **N. TURRO.** Modern Molecular Photochemistry. The Benjamin/Cummings Publ, 1978, 87